# EUROPÄISCHE PATENTSCHRIFT

(11) **EP 2 802 619 B1**
(45) Veröffentlichungstag und Bekanntmachung des Hinweises auf die Patenterteilung: **09.03.2016**
(21) Anmeldenummer: 12809830.8
(22) Anmeldetag: 28.12.2012
(51) Int. Cl.: C08L 25/16

(54) **TERPOLYMER-FORMMASSEN MIT GERINGEM GELBWERT, VERFAHREN ZU DEREN HERSTELLUNG SOWIE DEREN VERWENDUNG**
TERPOLYMER MOLDING COMPOSITIONS WITH LOW YELLOWING INDEX, PROCESS FOR THEIR PREPARATION AND THEIR USE
COMPOSITIONS MOULAGE DE TERPOLYMERE AVEC UN FAIBLE INDICE JAUNISSEMENT, PROCEDE DE LEUR PREPARATION ET LEUR UTILISATION

(30) Priorität: 13.01.2012 EP 12151033
(43) Veröffentlichungstag der Anmeldung: 19.11.2014
(73) Patentinhaber: Styrolution Europe GmbH, 60325 Frankfurt am Main (DE)
(72) Erfinder: ITTEMANN, Peter, 68623 Lampertheim (DE); MINKWITZ, Rolf, 68167 Mannheim (DE); HESSE, Pascal, 68163 Mannheim (DE); NIEDERMAIER, Bernd, 67069 Ludwigshafen (DE)
(74) Vertreter: Jacobi, Markus Alexander
(86) Internationale Anmeldenummer: PCT/EP2012/077051
(87) Internationale Veröffentlichungsnummer: WO 2013/104527

(56) Entgegenhaltungen:
- EP-A2- 0 264 791
- DE-A1- 19 728 629
- US-A- 3 010 936

## Beschreibung

Die vorliegende Erfindung betrifft thermoplastische Formmassen enthaltend ein Terpolymer aus Styrol, α-Methylstyrol und Acrylnitril sowie mindestens einen schlagzähmodifizierenden Propfkautschuk mit olefinischer Doppelbindung in der Kautschukphase. Diese Formmassen weisen einen geringen Gelbwert, hohen Glanz und eine hohe Erweichungstemperatur auf. Die Erfindung betrifft auch ein Verfahren zur Herstellung der Terpolymer-Formmassen und deren Verwendung.

Stabilisierte thermoplastische Formmassen aus Styrol-Acrylnitril-Copolymeren und Pfropfkautschuk sind seit langem bekannt und aufgrund ihres für viele Anwendungen günstigen Eigenschaftsprofils, insbesondere ihrer guten Schlagzähigkeit, zur Herstellung von Formteilen breit einsetzbar.Formteile aus dem Werkstoff ABS (Polybutadien-Kautschuk-Partikel, gepropft mit Polystyrolacrylnitril, in einer Polystyrolacrylnitril-Matrix) zeichnen sich durch gute mechanische Eigenschaften aus, beispielsweise durch hohe Festigkeit und Zähigkeit, insbesondere - bedingt durch die niedrige Glasübergangstemperatur (Tg) des Polybutadiens - durch gute Schlagzähigkeit auch bei niedrigen Temperaturen.

ABS-Polymere, insbesondere solche, die durch Emulsionspolymerisation hergestellt werden, haben oftmals eine deutliche Eigenfarbe, beispielsweise von gelblich bis bräunlich. Diese Eigenfarbe kann z. B. durch den Gelbwert (Yellowness Index, YI) ausgedrückt werden, der für derartige ABS-Polymere mit deutliche Eigenfarbe bei Werten von etwa 30 bis über 50 liegt. Dabei hängt der Gelbwert (YI) von mehreren Faktoren, u.a. vom Kautschukgehalt des ABS, ab. Ferner können bei der Herstellung der Formmassen, deren Weiterverarbeitung zu Formteilen und beim Gebrauch der Formteile häufig gelblich-bräunliche Verfärbungen auftreten. Diese Vergilbung bzw. Braunfärbung wird durch hohe Temperaturen begünstigt, wie sie z.B. bei der Spritzgussverarbeitung oder bei der Mischung mit Zusatzstoffen auf einem Extruder auftreten.

Diese Verfärbung ist häufig umso deutlicher, je stärker die Eigenfarbe des unverarbeiteten ABS-Granulats vor dem Spritzguss bzw. vor der Extrusion ist. Insbesondere die Eigenfärbung der Vergilbungs-gefährdeten Polymere ist problematisch, da der Gelbstich den gewünschten Farbton verfälschen kann (mangelnde Farbtreue) oder die Verwendung größerer Mengen teurer Farbmittel erfordert (hohe Einfärbungs-Kosten).

Für bestimmte technische Anwendungen hat ABS (Polybutadien-Kautschuk-Partikel, gepropft mit Polystyrol-acrylnitril, in Polystyrol-acrylnitril-Matrix) auch eine zu niedrige Erweichungstemperatur, messbar z.B. als Messwert Vicat B, wie z.B. für die Anwendung bei Wasserkochern oder Heizstrahlern.

In der Literatur sind mehrere Verfahren zur Synthese von vinylaromatischen Acrylnitril-Copolymeren in Emulsion beschrieben (EP-A 508 262, EP-A 000 419, DE-A 19 839 369). Die hier beschriebenen Polymere haben grundsätzlich einen hohen Gelbwert, eine zu niedrige Erweichungstemperatur und ihre Synthese in Emulsion führt zu Restmonomeren im Abwasser. In den älteren Dokumenten US 3,201,375 und BE 622 503 werden vinylaromatische Acrylnitril-Copolymere mit einem α-Methylstyrol-Anteil von 5 bis 35 Gew.-% beschrieben. Diese Zusammensetzungen haben eine unzureichende Wärmeformbeständigkeit.

In der US 3,268,625 werden AMSAN Copolymere (aus α-Methylstyrol und Acrylnitril) beschrieben, die gegebenenfalls auch Styrol enthalten können. Der maximale Anteil an α-Methylstyrol liegt bei 52 Gew.%. Auch diese Wärmeformbeständigkeit ist zu niedrig.

US-A-3010963 offenbart Zusammensetzungen aus schlagzäh-modifiziertem Pfropfkautschuk und Styrol/Methyl Styrol/Acrylonitril Kopolymer

In der DE-A 36 36 191 werden Copolymere mit einem geringen Anteil an α-Methylstyrol, 30 bis 45 Gew.-% beschrieben. Die genannte Wärmeformbeständigkeit ist dabei jedoch unzureichend.

In WO 2006/019214 wird ein Copolymer aus 5 Gew.-% Styrol, 67 Gew.-% α-Methylstyrol und 28 Gew.-% Acrylnitril beschrieben. Dieses Terpolymer hat ein unzureichendes Eigenschaftsprofil bezüglich der Wärmeformbeständigkeit.

Der vorliegenden Erfindung liegt es als eine Aufgabe zugrunde, verbesserte Formmassen mit erhöhter Wärmeformbeständigkeit und geringer Eigenfarbe auf der Basis eines Copolymeren aus Acrylnitril, α-Methylstyrol und Styrol (und eventuell weiterem Monomer) mit Kautschuk-Partikeln gepropft (z. B. mit Polybutadien-Kautschuk gepropft) und ggf. einem Copolymer aus Styrol-Acrylnitril bereitzustellen.

Die vorliegende Erfindung betrifft insbesondere wärmeformbeständige thermoplastische Formmassen, enthaltend als Komponenten, bezogen auf das Gesamtgewicht der Formmassen:
a) 50 bis 85 Teile eines oder mehrerer Terpolymere basierend auf Acrylnitril, alpha-Methylstyrol und Styrol (als Komponente A), wobei das Terpolymer besteht aus:
   - 12 bis 20 Gew.-%, oftmals 14 bis 19 Gew.-% Styrol
   - 22 bis 27 Gew.-%, oftmals 23 bis 26 Gew.-% Acrylnitril,
   - 57 bis 62 Gew.-%, oftmals 58 bis 60 Gew.-% alpha-Methylstyrol,
   - 0 bis 3 Gew.-% weitere copolymerisierbare Monomere,
b) 15 bis 50 Teile eines oder mehrerer schlagzäh-modifizierender Propfkautschuke mit olefinischer Doppelbindung in der Kautschukphase, als Komponente B,
c) 0 bis 30 Teile eines oder mehrerer Copolymere auf Basis von Styrol und Acrylnitril als Komponente C, bestehend aus
   - 71 bis 81 Gew.-%, bevorzugt 73 bis 79 Gew.-%, oftmals 75 bis 77% Gew.-% Styrol,
   - 29 bis 19 Gew.-%, bevorzugt 27 bis 21 Gew.-%, oftmals 25 bis 23 Gew.-% Acrylnitril,
   - 0 bis 5 Gew.-%, bevorzugt 0 bis 4 Gew.-%, oftmals 0 bis 3 Gew.-% weitere copolymerisierbare Monomere,
d) 0 bis 30 Teile eines oder mehrerer Zusatzstoffe, die von den Komponenten A, B, C verschieden sind, als Komponente D, und
e) 0 bis 100 Teile eines oder mehrerer faser- oder teilchenförmiger Füllstoffe als Komponente E.

Oftmals besteht die thermoplastische Zusammensetzung aus den o. g. Komponenten A, B sowie ggf. C bis E. Die Angabe Teile bezieht sich auf Gewichtsteile.

Das Terpolymer aus Acrylnitril, alpha-Methylstyrol und Styrol (Komponente A) soll dabei vorzugsweise folgende Eigenschaften haben:
- eine Vicat B-Erweichungstemperatur über 120°C,
- einem Gelbwert unter 20 (z. B. von 10 bis 19) und
- eine Viskositätszahl von 40 bis 60.

Das Terpolymer aus Acrylnitril, alpha-Methylstyrol und Styrol (Komponente A) kann durch ein schonendes Herstellungsverfahren so gewonnen werden, dass die Restgehalte an Monomeren insgesamt weniger als 3000 ppm betragen. Vorteilhaft sind insbesondere Restgehalte von weniger als 200 ppm, insbesondere weniger als 150 ppm Styrol, weniger als 200 ppm, insbesondere weniger als 50 ppm Ethylbenzol, weniger als 200 ppm, insbesondere weniger als 150 ppm Acrylnitril und weniger als 2000 ppm, insbesondere weniger als 1500 ppm alpha-Methylstyrol.

Das Terpolymer aus Acrylnitril, alpha-Methylstyrol und Styrol (Komponente A) kann durch ein schonendes Herstellungsverfahren so gewonnen werden, dass die Restgehalte an Oligomeren insgesamt weniger als 5000 ppm betragen. Vorteilhaft sind insbesondere Restgehalte von weniger als 3500 ppm an Dimeren und Trimeren (der eingesetzten Monomere).

Das Copolymer aus Styrol und Acrylnitril (Komponente C) soll dabei vorzugsweise folgende_Eigenschaften haben:
- eine Vicat B-Erweichungstemperatur über 100°C,
- einem Gelbwert unter 20 (z. B. von 10 bis 19)

Die Erfindung betrifft eine thermoplastische Formmasse, enthaltend:
a) 50 bis 85 Teile eines Terpolymeres auf Basis von Acrylnitril, alpha-Methylstyrol und Styrol (als Komponente A), bestehend aus:
   12 bis 20 Gew.-% Styrol
   22 bis 27 Gew.-% Acrylnitril,
   57 bis 62 Gew.-% alpha-Methylstyrol,
   0 bis 3 Gew.-% weitere copolymerisierbare Monomere,
b) 15 bis 50 Teile eines oder mehrerer schlagzäh-modifizierender Propfkautschuke mit olefinischer.Doppelbindung in der Kautschukphase, als Komponente B,
c) 0 bis 30 Teile eines oder mehrerer Copolymere auf Basis von Styrol und Acrylnitril als Komponente C, bestehend aus
   71 bis 81 Gew.-% Styrol,
   29 bis 19 Gew.-% Acrylnitril,
   0 bis 5 Gew.-% weitere copolymerisierbare Monomere,
d) 0 bis 30 Teile eines oder mehrerer Zusatzstoffe, die von den Komponenten A, B, C verschieden sind, als Komponente D, und
e) 0 bis 100 Teile faser- oder teilchenförmiger Füllstoffe als Komponente E.

In einer Ausführungsform betrifft die Erfindung eine thermoplastische Formmasse, enthaltend:
a) 50 bis 85 Teile eines Terpolymeres auf Basis von Acrylnitril, alpha-Methylstyrol und Styrol (als Komponente A), bestehend aus:
   12 bis 20 Gew.-% Styrol
   22 bis 27 Gew.-% Acrylnitril,
   57 bis 62 Gew.-% alpha-Methylstyrol,
b) 15 bis 50 Teile eines oder mehrerer schlagzäh-modifizierender Propfkautschuke mit olefinischer Doppelbindung in der Kautschukphase, als Komponente B,
c) 0 bis 30 Teile eines Copolymers auf Basis von Styrol und Acrylnitril als Komponente C, bestehend aus
   71 bis 81 Gew.-% Styrol,
   29 bis 19 Gew.-% Acrylnitril,
d) 0 bis 10 Teile eines oder mehrerer Zusatzstoffe, die von den Komponenten A, B, C verschieden sind, als Komponente D, und
e) 0 bis 40 Teile faser- oder teilchenförmiger Füllstoffe als Komponente E.

In einer Ausführungsform betrifft die Erfindung eine thermoplastische Formmasse, enthaltend 50 bis 85 Teile eines Terpolymers auf Basis von Acrylnitril, alpha-Methylstyrol und Styrol (als Komponente A), wobei das Terpolymer einen Restgehalte an Monomeren von insgesamt weniger als 3000 ppm aufweist.

Die Erfindung betrifft auch eine thermoplastische Formmasse enthaltend 50 bis 85 Teile eines Terpolymers auf Basis von Acrylnitril, alpha-Methylstyrol und Styrol (als Komponente A), wobei das Terpolymer Restgehalte an Monomeren von weniger als 200 ppm Styrol, weniger als 200 ppm Ethylbenzol, weniger als 200 ppm Acrylnitril und weniger als 2000 ppm alpha-Methylstyrol aufweist.

In einer Ausführungsform betrifft die Erfindung eine thermoplastische Formmasse, enthaltend enthaltend 50 bis 85 Teile eines Terpolymers auf Basis von Acrylnitril, alphaMethylstyrol und Styrol (als Komponente A), welches folgende Eigenschaften hat:
- eine Vicat B-Erweichungstemperatur über 120°C,
- einen Gelbwert unter 20 und
- eine Viskositätszahl von 40 bis 60.

In einer Ausführungsform betrifft die Erfindung eine thermoplastische Formmasse, dadurch gekennzeichnet, dass die Komponente B ein schlagzäh-modifizierender Propfkautschuk ist, der aus einer Propfauflage B1 aus 50 bis 80 Gew.-% (bezogen auf B) eines Elastomer-vernetzten Butadien-Polymers B1 besteht, sowie einer Propfauflage B2 bestehend aus:
- 25 bis 15 Gew.-%, vorzugsweise 24 bis 16 Gew.-%, besonders bevorzugt aus 23 bis 17 Gew.-% Acrylnitril und
- 75 bis 85 Gew.-%, vorzugsweise 76 bis 84 Gew.-%, besonders bevorzugt aus 77 bis 83 Gew.-% Styrol und/oder alpha-Methylstyrol.

In einer Ausführungsform betrifft die Erfindung eine thermoplastische Formmasse, dadurch gekennzeichnet, dass der mittlere Teilchendurchmesser von Komponente B zwischen 50 bis 800 nm liegt.

In einer Ausführungsform betrifft die Erfindung eine thermoplastische Formmasse, dadurch gekennzeichnet, dass der Quellungsindex der Komponente B von 7 bis 20 beträgt.

In einer Ausführungsform betrifft die Erfindung eine thermoplastische Formmasse, dadurch gekennzeichnet, dass eine Komponente B mit einer bimodalen Teilchengrößenverteilung einsetzt wird.

In einer Ausführungsform betrifft die Erfindung eine thermoplastische Formmasse, dadurch gekennzeichnet, dass als Komponente C 1 bis 30 Teile eines Copolymers auf Basis von Styrol und Acrylnitril eingesetzt werden, bestehend aus 75 bis 77 Gew.-% Styrol und 25 bis 23 Gew.-% Acrylnitril.

Gegenstand ist auch ein Verfahren zur Herstellung einer thermoplastischen Formmasse wie oben beschrieben, dadurch gekennzeichnet, dass man die Komponenten A und B sowie ggf. C bis E bei Temperaturen von 100 bis 300°C und einem Druck von 1 bis 50 bar in beliebiger Reihenfolge miteinander vermischt, anschließend knetet und extrudiert.

Gegenstand Ist auch ein Verfahren zur Herstellung eines Terpolymers auf Basis von Acrylnitril, alpha-Methylstyrol und Styrol (Komponente A), bestehend aus 12 bis 20 Gew.-% Styrol, 22 bis 27 Gew.-% Acrylnitril, 57 bis 62 Gew.-% alpha-Methylstyrol, sowie 0 bis 3 Gew.-% weiterer copolymerisierbarer Monomere, dadurch gekennzeichnet, dass man die Monomere in einer radikalischen Lösungsmittel-Polymerisation bei Temperaturen von 100 bis 140°C umsetzt und anschließend in einem Rohrbündel-reaktor bei einem Druck von kleiner als 50 mbar den Restmonomer-Gehalt auf weniger als 3000 ppm reduziert.

Gegenstand ist auch die Verwendung von thermoplastischen Formmassen wie oben beschrieben zur Herstellung von Formkörpern, Folien oder Fasern, sowie die Verwendung der thermoplastischen Formmassen zur Herstellung von Formkörpern für KFZ-Bauteile oder Teile von Elektronikgeräten.

Gegenstand der Erfindung sind auch die Formkörper, Fasern oder Folien aus einer thermoplastischen Formmasse wie oben beschrieben.

Die erfindungsgemäßen Formmassen enthalten vorzugsweise, bezogen auf das Gesamtgewicht (Masse) der Komponenten A, B (notwendige Komponenten) und ggf. C, D und E (optionale Komponenten), welches Gesamtgewicht insgesamt 100 Gewichtsprozent ergibt:
a.) 50 bis 85 Teile, bevorzugt 60 bis 80 Teile der Komponente A
b.) 15 bis 50 Teile, bevorzugt 20 bis 40 Teile der Komponente B,
c) 0 bis 30 Teile, oftmals 1 bis 20 Teile der Komponente C,
d) 0 bis 30 Teile, bevorzugt 0 bis 10, oftmals 1 bis 10 Teile der Komponente D,
e) 0 bis 100 Teile, bevorzugt 0 bis 40 Teile, oftmals 1 bis 20 der Komponente E.

Für die Komponenten A, B und C kann statt der Angabe Teile auch die Angabe Gewichtsprozent (bezogen auf die Gesamtheit der Komponenten A, B und C) gegeben werden, beispielsweise enthält die Formmasse oftmals:
a.) 50 bis 85, bevorzugt 60 bis 80 Gew.-%, oft 60 bis 79 Gew.% der Komponente A
b.) 15 bis 50, bevorzugt 20 bis 40 Gew.-%,oft 20 bis 39 Gew.% der Komponente B,
c) 0 bis 30, oftmals 1 bis 20 Gew.-% der Komponente C.

Die Erfindung betrifft in einer Ausführungsform eine thermoplastische Formmasse, bestehend aus:
a) 50 bis 85 Teile eines oder mehrerer Terpolymere auf Basis von Acrylnitril, alpha-Methylstyröl und Styrol (als Komponente A), bestehend aus:
   12 bis 20 Gew.-% Styrol
   22 bis 27 Gew.-% Acrylnitril,
   57 bis 62 Gew.-% alpha-Methylstyrol,
   0 bis 3 Gew.-% weitere copolymerisierbare Monomere,
b) 15 bis 50 Teile eines oder mehrerer schlagzäh-modifizierender Propfkautschuke mit olefinischer Doppelbindung in der Kautschukphase, als Komponente B,
c) 0 bis 30 Teile eines oder mehrerer Copolymere auf Basis von Styrol und Acrylnitril, als Komponente C, bestehend aus:
   71 bis 81 Gew.-% Styrol,
   29 bis 19 Gew.-% Acrylnitril,
   0 bis 5 Gew.-% weitere copolymerisierbare Monomere,
d) 0 bis 30 Teile eines oder mehrerer Zusatzstoffe als Komponente D, und
e) 0 bis 100 Teile eines oder mehrerer faser- und/oder teilchenförmiger Füllstoffe als Komponente E.

Die Erfindung betrifft in einer weiteren Ausführungsform eine thermoplastische Formmasse, enthaltend (oder bestehend aus):
a) 50 bis 85 Teile eines Terpolymeres auf Basis von Acrylnitril, alpha-Methylstyrol und Styrol (als Komponente A), bestehend aus:
   12 bis 20 Gew.-% Styrol
   22 bis 27 Gew.-% Acrylnitril,
   57 bis 62 Gew.-% alpha-Methylstyrol,
   0 bis 3 Gew.-% weitere copolymerisierbare Monomere,
b) 15 bis 50 Teile eines oder mehrerer schlagzäh-modifizierender Propfkautschuke mit olefinischer Doppelbindung in der Kautschukphase, als Komponente B,
c) 0 bis 30 Teile eines oder mehrerer Copolymere auf Basis von Styrol und Acrylnitril als Komponente C, bestehend aus
   71 bis 81 Gew.-% Styrol,
   29 bis 19 Gew.-% Acrylnitril,
   0 bis 5 Gew.-% weitere copolymerisierbare Monomere,
d)0 bis 30 Teile eines oder mehrerer Zusatzstoffe, die von den Komponenten A, B, C verschieden sind, als Komponente D, und
e)0 bis 100 Teile faser- oder teilchenförmiger Füllstoffe als Komponente E.

Die Erfindung betrifft in einer Ausführungsform eine thermoplastische Formmasse, enthaltend (oder bestehend aus):
a) 50 bis 85 Teile eines Terpolymeres auf Basis von Acrylnitril, alpha-Methylstyrol und Styrol (als Komponente A), bestehend aus:
   12 bis 20 Gew.-% Styrol
   22 bis 27 Gew.-% Acrylnitril,
   57 bis 62 Gew.-% alpha-Methylstyrol,
b) 15 bis 50 Teile eines oder mehrerer schlagzäh-modifizierender Propfkautschuke mit olefinischer Doppelbindung in der Kautschukphase, als Komponente B,
c) 0 bis 30 Teile eines Copolymers auf Basis von Styrol und Acrylnitril als Komponente C, bestehend aus
   71 bis 81 Gew.-% Styrol,
   29 bis 19 Gew.-% Acrylnitril,
d) 0 bis 10 Teile eines oder mehrerer Zusatzstoffe, die von den Komponenten A, B, C verschieden sind, als Komponente D, und
e) 0 bis 40 Teile faser- oder teilchenförmiger Füllstoffe als Komponente E.

Die Erfindung betrifft in einer Ausführungsform eine thermoplastische Formmasse, enthaltend 50 bis 85 Teile eines Terpolymers auf Basis von Acrylnitril, alpha-Methylstyrol und Styrol (als Komponente A), wobei das Terpolymer einen Restgehalte an Monomeren von insgesamt weniger als 3000 ppm aufweist.

Die Erfindung betrifft in einer Ausführungsform eine thermoplastische Formmasse, enthaltend 50 bis 85 Teile eines Terpolymers auf Basis von Acrylnitril, alpha-Methylstyrol und Styrol (als Komponente A), wobei das Terpolymer Restgehalte an Monomeren von weniger als 200 ppm Styrol, weniger als 200 ppm Ethylbenzol, weniger als 200 ppm Acrylnitril und weniger als 2000 ppm alpha-Methylstyrol aufweist.

Die Erfindung betrifft in einer Ausführungsform eine thermoplastische Formmasse, enthaltend 50 bis 85 Teile eines Terpolymers auf Basis von Acrylnitril, alpha-Methylstyrol und Styrol (als Komponente A), welches folgende Eigenschaften hat:
- eine Vicat B-Erweichungstemperatur über 120°C,
- einen Gelbwert unter 20 und
- eine Viskositätszahl von 40 bis 60.

Die Erfindung betrifft in einer Ausführungsform eine thermoplastische Formmasse, wobei die Komponente B ein schlagzäh-modifizierender Propfkautschuk ist, der aus einer Propfauflage B1 aus 50 bis 80 Gew.-% (bezogen auf B) eines Elastomer-vernetzten Butadien-Polymers B1 besteht, sowie einer Propfauflage B2 bestehend aus:
- 25 bis 15 Gew.-%, vorzugsweise 24 bis 16 Gew.-%, besonders bevorzugt aus 23 bis 17 Gew.-% Acrylnitril und
- 75 bis 25 Gew.-%, vorzugsweise 76 bis 24 Gew.-%, besonders bevorzugt aus 77 bis 83 Gew.-% Styrol und/oder alpha-Methylstyrol.

Die Erfindung betrifft in einer Ausführungsform eine thermoplastische Formmasse, wobei der mittlere Teilchendurchmesser von Komponente B zwischen 50 bis 800 nm liegt. Häufig beträgt der Quellungsindex der Komponente B von 7 bis 20. Oftmals wird eine Komponente B mit einer bimodalen Teilchengrößenverteilung einsetzt.

Die Erfindung betrifft in einer Ausführungsform eine thermoplastische Formmasse, wobei als Komponente C 1 bis 30 Teile eines Copolymers auf Basis von Styrol und Acrylnitril eingesetzt werden, bestehend aus 75 bis 77 Gew.-% Styrol und 25 bis 23 Gew.-% Acrylnitril.

Gegenstand der Erfindung ist auch ein Verfahren zur Herstellung von thermoplastischen Formmassen, wie oben beschrieben, dadurch gekennzeichnet, dass man die Komponenten A und B sowie ggf. C bis E bei Temperaturen von 100 bis 300°C und einem Druck von 1 bis 50 bar in beliebiger Reihenfolge miteinander vermischt, anschließend knetet und extrudiert.

Die Erfindung betrifft in einer Ausführungsform die Verwendung von thermoplastischen Formmassen wie oben beschrieben zur Herstellung von Formkörpern, Folien oder Fasern. Die Verwendung der thermoplastischen Formmassen zur Herstellung von Formkörpern für KFZ-Bauteile oder Teile von Elektronikgeräten ist dabei von besonderem Interesse.

Die Erfindung betrifft in einer Ausführungsform auch die Formkörper, Fasern oder Folien aus einer thermoplastischen Formmasse wie oben beschrieben.

Die Erfindung betrifft auch Verfahren zur Herstellung der Komponente A dieser Formmassen, die Verwendung der Komponente A zur Herstellung von Formkörpern sowie diese Formkörper selbst.

Durch die erfindungswesentliche spezielle Auswahl der einzelnen Komponenten und ihrer speziellen Mengenanteile weisen die erfindungsgemäßen Formmassen gegenüber den bekannten stabilisierten Formmassen eine verringerte Eigenfarbe und erhöhte Wärmeformbeständigkeit auf.

### Zur Komponente A und deren Herstellung:

Als Komponente A enthalten die erfindungsgemäßen thermoplastischen Formmassen mindestens ein Terpolymer aus Acrylnitril, alpha-Methylstyrol, Styrol (und eventuell ein weiteres Vinylmonomer), welches vorzugsweise durch eine Vicat B-Erweichungstemperatur über 120°C und einen Gelbwert unter 20 gekennzeichnet ist.

Die Molmasse (Mw) beträgt häufig von 70.000 bis 100.000 g/mol, der Wert (Mn) beträgt häufig von 26.000 bis 33.000 g/mol.

Die Vicat-Erweichungstemperatur wurde nach der Norm DIN ISO 306, mit einer Kraft von 50 N und einer Temperatursteigerung von 50 K je Stunde, an Normkleinstäben ermittelt. Das Polymergranulat muss trocken sein für die Herstellung der Normkleinstäbe von 3 mm Dicke und 10mm auf 10mm Fläche, wobei pro Messung immer mindestens zwei Probenkörper verwendet werden, deren durchschnittlicher Messwert angeben wird.

Die Bestimmung des Gelbwert (Yellowness Index YI) erfolgte durch Bestimmung der Farbkoordinaten X,Y,Z nach DIN 6167 bei Normlicht D 65 und 10°-Normalbeobachter.

Bevorzugte Komponenten A sind aufgebaut aus:
12 bis 20 Gew.-%, bevorzugt 14 bis 19 Gew.-%, Styrol und
22 bis 27 Gew.-%, bevorzugt 23 bis 26 Gew.-%, Acrylnitril, und
57 bis 62 Gew.-%, bevorzugt 58 bis 60 Gew.-%, alpha-Methylstyrol.

Sie können auch ggf. 0 bis 3 Gew.-% weiterer Monomere enthalten, wobei die Gew.-% jeweils bezogen sind auf das Gewicht der Komponente A und zusammen 100 Gew.-% ergeben.

Als oben genannte weitere Monomere sind alle copolymerisierbaren Monomere einsetzbar, wie beispielsweise p-Methylstyrol, t-Butylstyrol, Vinylnaphthalin, Alkylacrylate und/oder Alkylmethacrylate, beispielsweise solche mit C₁- bis C₈-Alkylresten, N-Phenylmaleinimid oder deren Mischungen. Oftmals sind jedoch keine weiteren Monomere enthalten, es handelt sich dann um ein echtes Terpolymer.

Das Terpolymer hat eine Viskositätszahl VZ gleich oder kleiner als 60 ml/g. Dabei wird die Viskositätszahl (VZ) gemessen nach DIN EN ISO 1628-2 bei 25°C, als 0,5 Gew.-%ige Lösung in Dimethylformamid; diese Messmethode gilt auch für alle im Folgenden genannten Viskositätszahlen.

Die Komponente A wird dabei in einer radikalischen Lösungs- oder Massepolymerisation hergestellt, mit oder ohne Hilfe von Initiatoren bei Temperaturen unterhalb von 140°C bis zu einer Konzentration von 50 bis 70%. Als Lösungsmittel taugen insbesondere Ethylbenzol, Toluol oder Methylethylketon.

Der Herstellung und Aufarbeitung der Komponente A kommt besondere Bedeutung zu, um einen geringen Monomer- bzw. Oligomer-Gehalt zu erreichen. Verschiedene Verfahren sind zur Herstellung durchführbar.

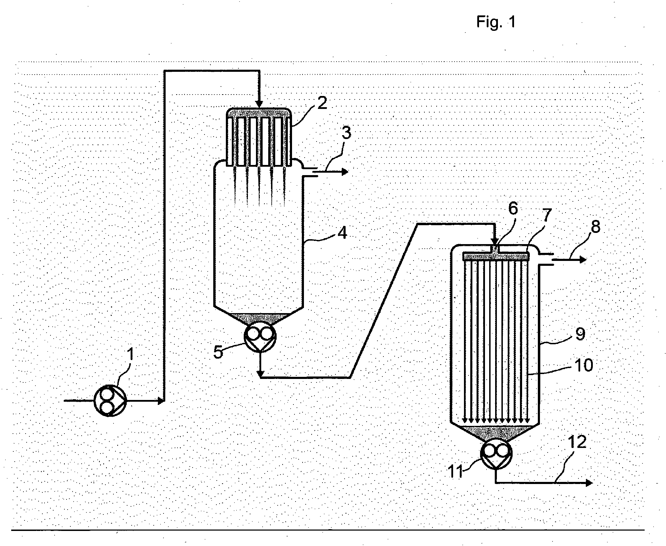

Die Erfindung betrifft daher auch ein Verfahren zur Herstellung eines Terpolymers auf Basis von Acrylnitril, alpha-Methylstyrol und Styrol (Komponente A), bestehend aus 12 bis 20 Gew.-% Styrol, 22 bis 27 Gew.-% Acrylnitril, 57 bis 62 Gew.-% alphaMethylstyrol, sowie 0 bis 3 Gew.-% weiterer copolymerisierbarer Monomere, dadurch gekennzeichnet, dass man die Monomere in einer radikalischen Lösungsmittel-Polymerisation bei Temperaturen von 100 bis 140°C umsetzt und anschließend in einem Rohrbündel-Reaktor bei einem Druck von kleiner als 50 mbar den Restmonomer-Gehalt auf weniger als 3000 ppm reduziert. Ein Verfahren zur Herstellung bzw. Aufarbeitung der Formmasse wird durch Figur 1 verdeutlicht.

Wie aus **Figur 1** ersichtlich wird, kann die Polymerlösung mit der Komponente A nach der Herstellung über eine Zahnradpumpe 1 einem senkrecht stehendem RohrbündelApparat von oben zugeführt werden.

Das darin erhaltene Rohrbündel 2 ist vorzugsweise auf einem Abscheidebehälter oder Zyklon 4 aufgesetzt, in dem die Trennung der in den Rohren entstehenden Gasphase von der Polymerphase erfolgt. Für die Isolierung des Polymers bis zu sehr niedrigen Monomergehalten (vorzugsweise von kleiner 4000 ppm, oftmals kleiner 2000 ppm) ist es sinnvoll, den Druck in dem Zyklon 4 auf 50 bis 100mbar, bevorzugt geringer als 50 mbar abzusenken.

Im Abscheidebehälter 4 sammelt sich die weitgehend "ent-monomerisierte" Polymerphase im Sumpf. Die Gase werden bevorzugt seitlich oder über eine Kopfleitung 3 abgezogen und der Polymerisation wieder zugeführt.

Für die schonend erfolgende Aufkonzentrierung durch Energieeintrag bei gleichzeitiger Verdampfung wird der Rohrbündelverdampfer vorzugsweise mit flüssigen oder dampfförmigen Wärmeträgern beheizt. Die Beheizung erfolgt so, dass die Temperatur im Ablauf 165°C bis 280°C, bevorzugt 210°C bis 250°C, beträgt. Die Mantelheizung weist Temperaturen von 190°C bis 240°C, bevorzugt 220°C bis 230°C auf.

Eine Besonderheit des erfindungsgemäßen Verfahrens besteht darin, dass innerhalb der Rohre keine Blenden oder Verengungen vorgesehen sind, d.h. der Druckverlust der Strömung in den Rohren ist gering. Er beträgt in Abhängigkeit von Beheizungstemperatur, Viskosität des Polymers, Durchsatzes und Rohrgeometrie vorzugsweise weniger als 10mbar, bevorzugt weniger als 5 mbar.

Durch den geringen Druck im Rohr beginnt bei genügend hoher Beheizungstemperatur das Eindampfen der Lösung bereits innerhalb der Rohre, bevorzugt kurz nach Eintritt der Lösung in die Rohre. Durch die einsetzende Verdampfung entsteht ein voluminöser Schaum, wodurch die Verweilzeit in den Rohren im Vergleich zur einphasigen Strömung stark verringert wird.

Überraschenderweise wird durch diese Zweiphasigkeit der Wärmeübergang im Vergleich zur Einphasigkeit verbessert, wodurch gute Eindampfergebnisse bei gleichzeitig geringen Beheizungstemperaturen realisierbar sind.

Durch die beim Verdampfen einsetzende Siedekühlung wird im Vergleich zur "Flashverdampfung" eine Überhitzung des Produkts vermieden. Dadurch, dass die Zweiphasigkeit innerhalb der Rohre mir Ihrem positiven Einfluss auf Wärmeübergang, Verweilzeit und Produkttemperatur (Siedekühlung) auftritt, ist eine schonende Eindampfung, d.h. mit geringer Temperaturbelastung und kurzen Verweilzeiten gewährleistet.

Der Durchsatz pro Rohr beträgt im Rohrbündel 2 oftmals 1 bis 10 kg/h bevorzugt 2 bis 5 kg/h. Die Rohrlänge beträgt vorzugsweise 1 bis 2,5 m, der Rohrdurchmesser bevorzugt 8 bis 23 mm. Zur Verbesserung des Wärmeübergangs können auch statische Mischer in den Rohren vorgesehen sein. Die Mischer haben den Vorteil, dass innerhalb der Rohre eine Durchmischung stattfindet und damit eine Überhitzung wandnaher Bereiche (Schichten) vermieden wird.

Zur gleichmäßigen Verteilung des in das Rohrbündel 2 eintretenden Stoffstroms auf die einzelnen Rohre in dem beschriebenen Rohrbündelapparat, kann optional eine Verteilerplatte (Lochplatte), die in dem Raum vor den Rohren einen erhöhten Druckverlust bewirkt, oberhalb des Rohreintritts montiert werden.

Der Restgehalt des Produkts an Monomeren beträgt bereits nach dem Passieren des Rohrbündelverdampfers oftmals 1000 bis 2000 ppm. Das auf diese Restgehalte isolierte Produkt wird im Sumpf des Abscheider-Behälters 4 gesammelt und mit einer Zahnrad- oder Schneckenpumpe 5 aus dem Abscheider ausgetragen und zum folgenden Strangverdampfer gefördert.

In diesem wird in einer besonderen Ausführungsart das Produkt von einem Zentralrohr 6 über einen Rohrverteiler 7 auf eine Vielzahl einzelner Rohre verteilt, welche eine konische oder zylindrische Ausführungsform aufweisen. Für die zylindrische Ausführungsform beträgt der Durchmesser (dz) von 2 bis 6 mm, bevorzugt 3 bis 5 mm und die Länge beträgt von 40 bis 80 mm bevorzugt 50 bis 70 mm.

Zur Gewährleistung einer gleichmäßigen Verteilung der Lösung über die Rohre werden diese beheizt. Der Rohrverteiler 7 befindet sich am oberen Ende eines auf einen Absolut-Druck von 0,5 bis 10, bevorzugt 0,5 bis 2 mbar über einen Brüdenabzug evakuierten, senkrecht stehenden, mantelheizten Behälters 9 mit einer bevorzugten Höhe von 2 bis 10 m, bevorzugt 2 bis 4 m. Zwischen dem Boden des Behälters und den Löchern des Rohrverteilers bilden sich dünne, stabile Polymerfäden 10 aus. Das Polymer entgast auf dem Weg zum Behälterboden bei einer durchschnittlichen Verweilzeit von weniger als 15 Sekunden.

Pro Loch werden mit einem Durchmesser von 2 bis 6 mm, bevorzugt von 3 bis 5 mm, eine Produktmenge von bevorzugt 0,2 bis 0,4 kg/h durchgesetzt. Das Produkt sammelt sich im vorzugsweise konischen Sumpf des Behälters 9, es wird mit einer Zahnrad- oder Schneckenpumpe 11 zu einer Granulierung oder zur Weiterverarbeitung als Schmelze 12 gefördert.

Die Restgehalte an Monomeren betragen nach diesem Entgasungsschritt im Terpolymer aus Acrylnitril, alpha-Methylstyrol und Styrol (Komponente A) insgesamt weniger als 2000 ppm. Restgehalte von weniger als 200 ppm, insbesondere weniger als 150 ppm Styrol, weniger als 200 ppm, insbesondere weniger als 50 ppm Ethylbenzol, weniger als 200 ppm, insbesondere weniger als 150 ppm Acrylnitril und weniger als 2000 ppm, insbesondere weniger als 1500 ppm alpha-Methylstyrol können erreicht werden.

Eine Methode zur Charakterisierung der Komponente A ist die Bestimmung der α-Methylstyrol/Styrol Triaden (S-S-S) und der α-Methylstyrol/Styrol Diaden (S-S) mit Hilfe der ¹³C-NMR-Spektroskopie. Das Copolymer wird hierbei in deuteriertem Chloroform mit Tetramethylsilan als internen Standard vermessen. In the Signalregion von 140 bis 150 ppm zeigt sich die Gruppe α-Methylstyrol/Styrol Diaden (S-S) bei 141 bis 144 ppm und die Gruppe α-Methylstyrol/Styrol (S-S-S) Triaden bei 147,5 bis 150 ppm.

Der Gehalt der jeweiligen Gruppe wird mit Hilfe des Integrals über alle Signale bestimmt, wie in der EP-A 1 265 961 beschrieben. Die Signale von α-Methylstyrol und Styrol sind oftmals nicht leicht zu unterscheiden.

### Zur Komponente B:

Als Komponente B werden ein oder mehrere kautschukelastische Pfropfcopolymere von vinylaromatischen Verbindungen, insbesondere Styrol, und Vinylcyaniden, insbesondere Acrylnitril, auf Polybutadien-Kautschuken eingesetzt.

Eine Methode zur Charakterisierung des Vernetzungszustandes von vernetzten Polymer-Teilchen ist die Messung des Quellungsindex (QI), der ein Maß für die Quellbarkeit eines mehr oder weniger stark vernetzten Polymeren durch ein Lösemittel ist. Übliche Quellungsmittel sind beispielsweise Methylethylketon oder Toluol. Üblicherweise liegt der QI des Pfropfcopolymers B der erfindungsgemäßen Formmassen im Bereich von QI = 7 bis 20. Bevorzugt wird ein QI von 8 bis 15, besonders bevorzugt von 8 bis 13 in Toluol.

Zur Bestimmung des Quellungsindex wird eine wässrige Dispersion des Pfropfcopolymers B auf einen Blech bei 80°C unter leichtem Vakuum (600 bis 800 mbar) und Stickstoffatmosphäre über Nacht getrocknet. Von dem ca. 2mm dicken übrigbleibenden Film wird anschließend eine 1cm² große Scheibe abgeschnitten und in 50ml Toluol (oder Methylethylketon) in einem Penicillinglas über Nacht gequollen. Das überstehende Toluol wird abgesaugt, der gequollene Film gewogen und über Nacht bei 80°C getrocknet. Das Gewicht des getrockneten Films wird bestimmt. Der Quellungsindex ergibt sich aus dem Quotienten der Gewichte des gequollenen Gels und dem getrockneten Gel.

Die Komponente B besteht bevorzugt aus einen oder mehreren schlagzähmodifizierenden Pfropfkautschuken mit olefinischer Doppelbindung in der Kautschukphase. Das Pfropfpolymerisat B ist aufgebaut aus einer "weichen" kautschukelastischen, teilchenförmigen "Pfropfgrundlage" B1, und einer "harten Pfropfauflage" B2.

Die Pfropfgrundlage B1 ist mit einem Anteil von 40 bis 90, bevorzugt 45 bis 85 und besonders bevorzugt 50 bis 80 Gew.-%, bezogen auf die Komponente B, enthalten.

Man erhält die Pfropfgrundlage B1 durch Polymerisation von, bezogen auf B1, 70 bis 100, bevorzugt 75 bis 100 und besonders bevorzugt 80 bis 100 Gew.-% mindestens eines konjugierten Diens B11, und 0 bis 30, bevorzugt 0 bis 25 und besonders bevorzugt 0 bis 10 Gew.-% mindestens eines weiteren monoethylenisch ungesättigten Monomeren. Als konjugierte Diene B11 kommen Butadien, Isopren, Chloropren oder deren Mischungen in Betracht. Bevorzugt verwendet man Butadien oder Isopren oder deren Mischungen, ganz besonders Butadien.

Der Bestandteil B1 der Formmassen kann außerdem auf Kosten der Monomeren B11 weitere Monomere B12 enthalten, welche die mechanischen und thermischen Eigenschaften des Kerns in einem gewissen Bereich variieren. Als Beispiele für solche monoethylenisch ungesättigten Comonomere seien genannt: Styrol, alpha-Methylstyrol, Acrylnitril, Maleinsäureanhydrid, Acrylsäure, Methylacrylsäure, Maleinsäure oder Fumarsäure.

Bevorzugt werden Styrol, α-Methylstyrol, n-Butylacrylat oder deren Mischungen als Monomere B12 verwendet, besonders bevorzugt Styrol und n-Butylacrylat oder deren Mischungen und ganz besonders bevorzugt Styrol. Styrol oder n-Butylacrylat oder deren Mischungen verwendet man insbesondere in Mengen von zusammengenommen bis zu 20 Gew.-%, bezogen auf B1.

In einer besonderen Ausführungsform verwendet man eine Pfropfgrundlage aus, bezogen auf B1:
B11 70 bis 99,9, bevorzugt 90 bis 99 Gew.-% Butadien, und
B12 0,1 bis 30, bevorzugt 1 bis 10 Gew.-% Styrol.

Die Pfropfauflage B2 ist mit einem Anteil von 10 bis 60, bevorzugt 15 bis 55 und besonders bevorzugt 20 bis 50 Gew.-%, bezogen auf die Komponente B enthalten.

Man erhält die Pfropfauflage B2 durch Polymerisation von,
bezogen auf B2:
B21 65 bis 95, bevorzugt 70 bis 90 und besonders bevorzugt 72 bis 85 Gew.-% mindestens eines vinylaromatischen Monomeren,
B22 5 bis 35, bevorzugt 10 bis 30 und besonders bevorzugt 15 bis 28 Gew.-% Acrylnitril,
B23 0 bis 30, bevorzugt 0 bis 20 und besonders bevorzugt 0 bis 15 Gew.-% mindestens eines weiteren monoethylenisch ungesättigten Monomeren.

Als vinylaromatische Monomere kann man Styrol und/oder alpha-Methylstyrol verwenden. Als weitere Monomere B23 kommen die weiter oben für die Komponente B12 genannten Monomere in Betracht. Insbesondere Methylmethacrylat und Acrylate, wie n-Butylacrylat, sind geeignet. Ganz besonders geeignet als Monomeres B23 ist Methylmethacrylat MMA, wobei eine Menge von bis zu 20 Gew.-% MMA, bezogen auf B2, bevorzugt ist.

Die Pfropfpolymere werden oft nach dem Verfahren der Emulsionspolymerisation hergestellt. Üblicherweise polymerisiert man bei 20 bis 100° C, bevorzugt 30 bis 90° C. In der Regel werden übliche Emulgatoren mitverwendet, beispielsweise Alkalimetallsalze von Alkyl- oder Alkylarylsulfonsäuren, Alkylsulfate, Fettalkoholsulfonate, Salze höherer Fettsäuren mit 10 bis 30 Kohlenstoffatomen, Sulfosuccinate, Ethersulfonate oder Harzseifen. Vorzugsweise nimmt man die Alkalimetallsalze, insbesondere die Na- und K-Salze, von Älkylsulfonaten oder Fettsäuren mit 10 bis 18 Kohlenstoffatomen.

In der Regel werden die Emulgatoren in Mengen von 0,5 bis 5 Gew.-%, insbesondere von 0,5 bis 3 Gew.-%, bezogen auf die bei der Herstellung der Pfropfgrundlage B1 eingesetzten Monomeren, eingesetzt.
Vorzugsweise verwendet man zur Herstellung der Dispersion so viel Wasser, dass die fertige Dispersion einen Feststoffgehalt von 20 bis 50 Gew.-% hat. Üblicherweise wird bei einem Wasser/Monomeren-Verhältnis von 2:1 bis 0,7:1 gearbeitet.

Zum Starten der Polymerisations-Reaktion sind alle Radikalbildner geeignet, die bei der gewählten Reaktionstemperatur zerfallen, also sowohl solche, die allein thermisch zerfallen, als auch solche, die dies in Gegenwart eines Redox-Systems tun. Als Polymerisationsinitiatoren kommen vorzugsweise Radikalbildner, beispielsweise Peroxide wie bevorzugt Peroxosulfate (etwa Natrium- oder Kaliumpersulfat) und Azoverbindungen wie Azodiisobutyronitril in Betracht. Es können jedoch auch RedoxSysteme, insbesondere solche auf Basis von Hydroperoxiden wie Cumolhydroperoxid, eingesetzt werden.

In der Regel werden die Polymerisationsinitiatoren in einer Menge von 0,1 bis 1 Gew.-%, bezogen auf die Pfropfgrundlage-Monomeren B11 und B12, eingesetzt.
Die Radikalbildner und auch die Emulgatoren werden dem Reaktionsansatz beispielsweise diskontinuierlich als Gesamtmenge zu Beginn der Reaktion, oder aufgeteilt in mehrere Portionen absatzweise zu Beginn und zu einem oder mehreren späteren Zeitpunkten zugefügt, oder kontinuierlich während eines bestimmten Zeitintervalls zugefügt. Die kontinuierliche Zugabe kann auch entlang eines Gradienten erfolgen, der z.B. auf- oder absteigend, linear oder exponentiell, oder auch stufenweise (Treppenfunktion) sein kann.

Ferner kann man Molekulargewichtsregler wie z.B. Ethylhexylthioglycolat, n- oder t-Dodecylmercaptan oder andere Mercaptane, Terpinole und dimeres α-Methylstyrol oder andere, zur Regelung des Molekulargewichts geeigneten Verbindungen, mitverwenden. Die Molekulargewichtsregler werden dem Reaktionsansatz diskontinuierlich oder kontinuierlich zugefügt, wie dies für die Radikalbildner und Emulgatoren zuvor beschrieben wurde.

Zur Einhaltung eines konstant bleibenden pH-Wertes, der vorzugsweise bei 6 bis 9 liegt, kann man Puffersubstanzen wie Na₂HPO₄/NaH₂PO₄, Natriumhydrogencarbonat öder Puffer auf Basis Citronensäure/Citrat, mitverwenden. Regler und Puffersubstanzen werden in den üblichen Mengen eingesetzt, so dass sich nähere Angaben hierzu erübrigen.

In einer besonderen bevorzugten Ausführungsform fügt man während der Pfropfung der Pfropfgrundlage B1 mit den Monomeren B21 bis B23 ein Reduktionsmittel zu.

Man kann die Pfropfgrundlage in einer besonderen Ausführungsform auch durch Polymerisation der Monomeren B1 in Gegenwart eines feinteiligen Latex herstellen (sog. "Saatlatex-Fahrweise" der Polymerisation). Dieser Latex wird vorgelegt und kann aus kautschukelastische Polymere bildenden Monomeren, oder auch aus anderen Monomeren, wie sie bereits genannt wurden, bestehen. Geeignete Saat-Latices bestehen beispielsweise aus Polybutadien oder Polystyrol.

In einer anderen bevorzugten Ausführungsform kann man die Pfropfgrundlage B1 im sogenannten Zulaufverfahren herstellen. Bei diesem Verfahren wird ein bestimmter Anteil der Monomeren B1 vorgelegt und die Polymerisation gestartet, wonach man den Rest der Monomeren ("Zulaufanteil") B1 als Zulauf während der Polymerisation zufügt.

Die Zulaufparameter (Gestalt des Gradienten, Menge, Dauer, etc.) hängen von den anderen Polymerisationsbedingungen ab. Sinngemäß gelten auch hier die zur Zugabe-Weise des Radikalstartes bzw. Emulgators gemachten Ausführungen. Bevorzugt beträgt beim Zulaufverfahren der vorgelegte Anteil der Monomeren 5 bis 50, besonders bevorzugt 8 bis 40 Gew.-%, bezogen auf B1. Bevorzugt lässt man den Zulaufanteil von B1 innerhalb 1 - 18 Stunden, insbesondere 2 - 16 Stunden, ganz besonders 4 bis 12 Stunden, zulaufen.

Weiterhin eigenen sich auch Pfropfpolymerisate mit mehreren "weichen" und "harten" Schalen, z.B. des Aufbaus B1-B2-B1-B2, oder B2-B1-B2, vor allem im Falle größerer Teilchen.

Die genauen Polymerisationsbedingungen, insbesondere Art, Menge und Dosierung des Emulgators und der anderen Polymerisationshilfsstoffe werden bevorzugt so gewählt, dass der erhaltene Latex des Pfropfpolymerisates B, eine mittlere Teilchengröße, definiert durch den d₅₀-Wert der Teilchengrößenverteilung, von 80 bis 800nm, bevorzugt 80 bis 600 nm und besonders bevorzugt 85 bis 400 nm aufweist gemessen mit Hilfe der HDC (W. Wohlleben and H. Schuch in Measurement of Particle Size Distribution of Polymer Latexes, 2010, Editors: Luis M. Gugliotta and Jorge R. Vega, p. 130 - 153).

Man stimmt die Reaktionsbedingungen vorzugsweise so aufeinander ab, dass die Polymer-Teilchen von B eine bimodale Teilchengrößenverteilung aufweisen, also eine Größenverteilung mit zwei mehr oder weniger ausgeprägten Maxima. Das erste Maximum ist deutlicher ausgeprägt (vergleichsweise schmaler Peak) als das zweite und liegt in der Regel bei 25 bis 200, bevorzugt 60 bis 170 besonders bevorzugt 70 bis 150 nm.
Das zweite Maximum liegt in der Regel bei 150 bis 800, bevorzugt 180 bis 700, besonders bevorzugt 200 bis 600 nm. Dabei liegt das zweite Maximum (150 bis 800 nm) bei größeren Teilchengrößen als das erste Maximum (25 bis 200 nm).

Bevorzugt wird die bimodale Teilchengrößenverteilung durch eine (teilweise) Agglomeration der Polymer-Teilchen erzielt. Dazu kann beispielsweise wie folgt vorgegangen werden: Man polymerisiert die Monomeren B1, welche den Kern aufbauen, bis zu einem Umsatz von üblicherweise mindestens 90, bevorzugt größer 95 %, bezogen auf die eingesetzten Monomeren. Dieser Umsatz ist in der Regel nach 4 bis 20 Stunden erreicht. Der erhaltene Kautschuklatex hat eine mittlere Teilchengröße d50 von maximal 200 nm und eine enge Teilchengrößenverteilung (nahezu monodisperses System).

In der zweiten Stufe wird der Kautschuklatex agglomeriert. Dies geschieht in der Regel durch Zugabe einer Dispersion eines Acrylesterpolymers. Vorzugsweise werden Dispersionen von Copolymerisaten von (C₁-C₄-Alkyl)estern der Acrylsäure, vorzugsweise von Ethylacrylat, mit 0,1 bis 10 Gew.-% polare Polymerisate bildenden Monomeren, wie z.B. Acrylsäure, Methacrylsäure, Acrylamid oder Methacrylamid, N-Methylolmethacrylamid oder N-Vinylpyrrolidon, eingesetzt.

Bevorzugt ist eine Zusammensetzung aus 80 bis 98 % Ethylacrylat und 2 bis 20 % Methacrylamid, besonders bevorzugt ist eine Zusammensetzung aus 90 bis 98 % Ethylacrylat und 2 bis 10 % Methacrylamid. Die Agglomerier-Dispersion kann gegebenenfalls auch mehrere der genannten Acrylesterpolymere enthalten.

Die Konzentration der Acrylesterpolymere in der zur Agglomeration verwendeten Dispersion soll im Allgemeinen zwischen 3 und 40 Gew.-% liegen. Bei der Agglomeration werden 0,2 bis 20, vorzugsweise 1 bis 5 Gew.-Teile der Agglomerier-Dispersion auf 100 Teile des Kautschuklatex, jeweils berechnet auf Feststoffe, eingesetzt. Die Agglomeration wird durch Zugabe der Agglomerier-Dispersion zum Kautschuk durchgeführt. Die Geschwindigkeit der Zugabe ist normalerweise nicht kritisch, im Allgemeinen dauert sie etwa 1 bis 30 Minuten bei einer Temperatur zwischen 20 und 90°C, vorzugsweise zwischen 30 und 75°C.

Außer mittels einer Acrylesterpolymer-Dispersion kann der Kautschuklatex auch durch andere Agglomerier-Mittel wie z.B. Essigsäureanhydrid, agglomeriert werden. Auch eine Agglomeration durch Druck oder Einfrieren (Druck- bzw. Gefrieragglomeration) ist möglich. Die genannten Methoden sind dem Fachmann bekannt.

Unter den genannten Bedingungen wird nur ein Teil der Kautschukteilchen agglomeriert, so dass eine bimodale Verteilung entsteht.
Dabei liegen nach der Agglomeration im Allgemeinen mehr als 50, vorzugsweise zweischen 75 und 95 % der Teilchen (Zahlen-Verteilung) im nicht agglomerierten Zustand vor. Der erhaltene teilagglomerierte Kautschuklatex ist verhältnismäßig stabil, so dass er ohne weiteres gelagert und transportiert werden kann, ohne dass Koagulation eintritt.

Um eine bimodale Teilchengrößenverteilung des Pfropfpolymerisates B zu erzielen, ist es auch möglich, zwei verschiedene Pfropfpolymerisate B' und B", die sich in ihrer mittleren Teilchengröße unterscheiden, getrennt voneinander in üblicher Weise herzustellen und die Pfropfpolymerisate B' und B" im gewünschten Mengenverhältnis zusammenzugeben.

Üblicherweise wird die Polymerisation der Pfropfgrundlage B1 durch Wahl der Reaktionsbedingungen so geführt, dass eine Pfropfgrundlage mit einem bestimmten Vernetzungszustand resultiert.

Als hierfür wesentliche Parameter sind beispielhaft anzuführen die Reaktionstemperatur und -dauer, das Verhältnis von Monomeren, Regler, Radikalstarter und beispielsweise beim Zulaufverfahren, die Zulaufgeschwindigkeit und die Menge und der Zugabe-Zeitpunkt von Regler und Initiator.

Eine Methode zur Charakterisierung des Vernetzungszustandes von vernetzten Polymerteilchen ist die Messung des Quellungsindex QI, der ein Maß für die Quellbarkeit eines mehr oder weniger stark vernetzten Polymeren durch ein Lösemittel ist. Übliche Quellungsmittel sind beispielsweise Methyletylketon oder Toluol. Üblicherweise liegt der QI der ungepfropften erfindungsgemäßen Formmassen C1 im Bereich QI = 10 bis 60, bevorzugt bei 15 bis 55 und besonders bevorzugt bei 20 bis 50 in Toluol.

Eine andere Methode zur Charakterisierung des Vernetzungszustandes ist die Messung von NMR-Relaxationszeiten der beweglichen Protonen, die sog. T2-Zeiten. Je stärker vernetzt ein bestimmtes Netzwerk ist, desto niedriger liegen seine T2-Zeiten. Übliche T2-Zeiten für die erfindungsgemäßen Pfropfgruridlagen B1 sind mittlere T2-Zeiten im Bereich 2,0 bis 4,5 ms, bevorzugt 2,5 bis 4,0 ms und besonders bevorzugt 2,5 bis 3,8 ms, gemessen an verfilmten Proben bei 80°C.

Ein weiteres Maß für die Charakterisierung der Pfropfgrundlage und deren Vernetzungszustand ist der Gelgehalt, d.h. derjenige Produktanteil, der vernetzt und damit in einem bestimmten Lösemittel nicht löslich ist. Sinnvollerweise wird der Gelgehalt im gleichen Lösemittel wie der Quellungsindex bestimmt. Übliche Gelgehalte der erfindungsgemäßen Pfropfgrundlagen B1 liegen im Bereich 50 bis 90 %, bevorzugt 55 bis 85 % und besonders bevorzugt 60 bis 80 %.

Die Bestimmung des Quellungsindex geschieht beispielsweise nach folgendem Verfahren: ca. 0,2 g des Feststoffes einer durch Verdampfen des Wassers verfilmten Pfropfgrundlagendispersion werden in einer genügend großen Menge (z.B. 50 g) Toluol angequollen. Nach z.B. 24 h wird das Toluol abgesaugt und die Probe ausgewogen. Nach Trocknen der Probe im Vakuum wird erneut ausgewogen. Der Quellungsindex ist das Verhältnis der Auswaage nach dem Quellungsvorgang zu der Auswaage trocken nach der erneuten Trocknung. Dementsprechend errechnet sich der Gelanteil aus dem Verhältnis der Trocken-Auswaage nach dem Quellschritt zur Einwaage vor dem Quellschritt (x 100 %)

Die Bestimmung der T2-Zeit geschieht durch Messen der NMR-Relaxation einer entwässerten und verfilmten Probe der Pfropfgrundlagendispersion. Hierzu wird beispielsweise die Probe nach Ablüften über Nacht bei z.B. 60°C 3 h im Vakuum getrocknet und dann mit einem geeigneten Meßgerät (z.B. Minispec-Gerät der Firma Bruker), bei 80°C vermessen. Vergleichbar sind nur Proben, die nach der gleichen Methode vermessen wurden, da die Relaxation deutlich temperaturabhängig ist.

Die Herstellung der Pfropfauflage B2 kann unter den gleichen Bedingungen wie die Herstellung der Pfropfgrundlage B1 erfolgen, wobei man die Auflage B2 in einem oder mehreren Verfahrensschritten herstellen kann. Beispielsweise kann man bei einer zweistufigen Pfropfung zunächst Styrol bzw. α-Methylstyrol alleine und danach Styrol und Acrylnitril in zwei aufeinander folgenden Schritten polymerisieren. Diese zweistufige Pfropfung (zunächst Styrol, dann Styrol/Acrylnitril) ist eine bevorzugte Ausführungsform. Weitere Einzelheiten zur Herstellung der Pfropfpolyrnerisate B sind in den DE 12 60 135 und DE 31 49 358 beschrieben.

Es ist vorteilhaft, die Pfropfpolymerisation auf die Pfropfgrundlage B1 wiederum in wässriger Emulsion durchzuführen. Sie kann im gleichen System wie die Polymerisation der Pfropfgrundlage vorgenommen werden, wobei weiter Emulgators und Initiator zugegeben werden kann. Diese müssen mit den zur Herstellung der Pfropfgrundlage B1 verwendeten Emulgatoren bzw. Initiatoren nicht identisch sein. So kann es z.B. zweckmäßig sein, als Initiator für die Herstellung der Pfropfgrundlage B1 ein Persulfat zu verwenden, zur Polymerisation der Pfropfhülle B2 jedoch ein Redoxinitiatorsystem einzusetzen. Für die Wahl von Emulgator, Initiator und Polymerisationshilfsstoffen gilt das bei der Herstellung der Pfropfgrundlage B1 gesagte.
Das aufzupfropfende Monomeren-Gemisch kann dem Reaktionsgemisch auf einmal, absatzweise in mehreren Stufen oder vorzugsweise kontinuierlich während der Polymerisation zugegeben werden.

Soweit bei der Pfropfung der Pfropfgrundlage B1 nicht gepfropfte Polymere aus den Monomeren B2 entstehen, werden die Mengen, die in der Regel unter 10 Gew.-% von B2 liegen, der Masse der Komponente B zugeordnet.

Die erfindungsgemäßen Pfropfcopolymere B können so weiterverwendet werden, wie sie in der Reaktionsmischung anfallen, beispielsweise als Latexemulsion oder -dispersion. Alternativ und wie es für die meisten Anwendungen bevorzugt ist, können sie aber auch in einem weiteren Schritt aufgearbeitet werden. Maßnahmen zur Aufarbeitung sind dem Fachmann bekannt.

Dazu zählt z.B., dass die Pfropfcopolymere B aus der Reaktionsmischung isoliert werden, z.B. durch Sprühtrocknung, Scherung oder durch Fällen mit starken Säuren oder mittels Nukleierungsmitteln wie anorganischen Verbindungen z.B. Magnesiumsulfat. Die in der Reaktionsmischung vorliegenden Pfropfcopolymere B können aber auch dadurch aufgearbeitet werden, dass sie ganz oder teilweise entwässert werden. Ebenso ist es möglich, die Aufarbeitung mittels einer Kombination der genannten Maßnahmen vorzunehmen.

Üblicherweise liegt der QI der Pfropfcopolymere im Bereich QI = 7 bis 20, bevorzugt bei 8 bis 15 und besonders bevorzugt bei 8 bis 13

Das Mischen der Komponenten A und B zur Herstellung der Formmasse kann nach jeder beliebigen Weise nach allen bekannten Methoden erfolgen. Wenn diese Komponenten beispielsweise durch Emulsionspolymerisation hergestellt worden sind, ist es möglich, die erhaltenen Polymerdispersionen miteinander zu vermischen, darauf die Polymerisate gemeinsam auszufällen und das Polymer-Gemisch aufzuarbeiten. Vorzugsweise erfolgt jedoch das Abmischen dieser Komponenten durch gemeinsames Extrudieren, Kneten oder Verwalzen der Komponenten, wobei die Komponenten, sofern erforderlich, zuvor aus der bei der Polymerisation erhaltenen Lösung oder wässrigen Dispersion isoliert worden sind. Die in wässriger Dispersion erhaltenen Produkte B der Pfropfcopolymerisation können auch nur teilweise entwässert werden und als feuchte Krümel mit der Hartmatrix B vermischtwerden, wobei dann während des Vermischens die vollständige Trocknung der Pfropfcopolymere C erfolgt.

### Zur Komponente C:

Als Komponente C können die erfindungsgemäßen thermoplastischen Formmassen ein Styrol-Acrylnitril-Copolymer enthalten. Die Menge an Komponente C beträgt in der Regel von 0 bis 30 Gewichtsteile, für viele Anwendungen auch 1 bis 20 Gewichtsteile.

Als Komponente C sind grundsätzlich alle dem Fachmann bekannten und in der Literatur beschriebenen Styrol-Acrylnitril-Copolymere oder deren Mischungen einsetzbar, sofern deren Mischungen eine Viskositätszahl VZ (gemessen nach DIN EN ISO 1628-2 bei 25 °C als 0,5 gew.%ige Lösung in Dimethylformamid; diese Messmethode gilt auch für alle im folgenden genannten Viskositätszahlen VZ) gleich oder kleiner als 80 ml/g haben.

Bevorzugte Komponenten C sind aufgebaut aus:
71 bis 81 Gew.-%, bevorzugt 73 bis 79, insbesondere 75 bis 77 Gew.-%, Styrol und 29 bis 19 Gew.-%, bevorzugt 27 bis 21, insbesondere 25 bis 23 Gew.-%, Acrylnitril, sowie 0 bis 5 Gew.-%, bevorzugt 0 bis 4 Gew.-%, insbesondere 0 bis 3 Gew.-%, weitere Monomere, wobei die Gew.-% jeweils bezogen sind auf das Gewicht der Komponente C und zusammen 100 Gew.-% ergeben.

Als oben genannte weitere Monomere sind alle copolymerisierbaren Monomere einsetzbar wie beispielsweise p-Methylstyrol, t-Butylstyrol, Vinylnaphthalin, Alkylacrylate und/oder Alkylmethacrylate, beispielsweise solche mit C₁- bis C₈-Alkylresten, N-Phenylmaleinimid oder deren Mischungen. Oftmals handelt es sich jedoch bei Komponente C um eine reine SAN-Matrix.

Die Copolymere der Komponente C lassen sich nach bekannten Methoden herstellen, insbesondere durch Massepolymerisation.

### Zur Komponente D:

Neben den Komponenten A, B, und C können die erfindungsgemäßen Formmassen als Komponente D einen oder mehrere verschiedene Zusatzstoffe bzw. Additive, die für Kunststoffmischungen typisch und gebräuchlich sind, enthalten.

Als solche Zusatzstoffe bzw. Additive seien beispielsweise genannt: Farbstoffe, Pigmente, Färbemittel, Antistatika, Antioxidantien, Stabilisatoren zur Verbesserung der Thermostabilität, zum Anheben der Hydrolysebeständigkeit und der Chemikalienbeständigkeit, Mittel gegen die Wärmezersetzung und insbesondere die Schmier-/Gleitmittel, die für die Herstellung von Formkörpern bzw. Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder anderen speziellen Effekte) des Zusatzstoffes auszunutzen. Wärmestabilisatoren bzw. Oxidationsverzögerer sind üblicherweise Metall-halogenide (Chloride, Bromide, lodide), die sich von Metallen der Gruppe I des Periodensystems der Elemente ableiten (wie Li, Na, K, Cu).

Als Komponente D geeignete Stabilisatoren sind die üblichen gehinderten Phenole, aber auch "Vitamin E" bzw. analog aufgebaute Verbindungen. Auch Benzophenone, Resorcine, Salicylate, Benzotriazole und andere Verbindungen sind geeignet. Diese werden üblicherweise in Mengen von 0 bis 2 Gew.-%, bevorzugt 0,01 bis 2 Gew.-% (bezogen auf das Gesamtgewicht der erfindungsgemäßen Formmassen) verwendet.

Geeignete Gleit- und Entformungsmittel sind Stearinsäuren, Stearylalkohol, Stearinsäureester bzw. allgemein höhere Fettsäuren, deren Derivate und entsprechende Fettsäuregemische mit 12 bis 30 Kohlenstoffatomen. Die Mengen dieser Zusätze liegen - sofern vorhanden - im Bereich von 0,05 bis 1 Gew.-% (bezogen auf das Gesamtgewicht der erfindungsgemäßen Formmassen).

Auch Silikonöle, oligomeres Isobutylen oder ähnliche Stoffe kommen als Zusatzstoffe in Frage, die üblichen Mengen betragen - sofern vorhanden - 0,05 bis 5 Gew.-% (bezogen auf das Gesamtgewicht der erfindungsgemäßen Formmassen). Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar.

Verarbeitungshilfsmittel, Schmiermittel und Antistatika werden üblicherweise in Mengen von 0 bis 2 Gew.-%, bevorzugt 0,01 bis 2 Gew.-% (bezogen auf das Gesamtgewicht der erfindungsgemäßen Formmassen) verwendet.

### Zur Komponente E:

Als Komponente E können die erfindungsgemäßen Formmassen von den anderen Komponenten A bis D verschiedene faser- oder teilchenförmige Füllstoffe oder deren Mischungen enthalten. Dabei handelt es sich vorzugsweise um kommerziell erhältliche Produkte, beispielsweise Kohlenstofffasern und Glasfasern.

Verwendbare Glasfasern können aus E-, A- oder C-Glas sein und sind vorzugsweise mit einer Schlichte und einem Haftvermittler ausgerüstet. Ihr Durchmesser liegt im Allgemeinen zwischen 6 und 20 µm.
Es können sowohl Endlosfasern als auch Schnittglasfasern (staple) oder sogenannte "Rovings mit einer Länge von 1 bis 10 mm, vorzugsweise 3 bis 6 mm, eingesetzt werden.

Weiterhin können als Komponente E auch Füll- oder Verstärkungsstoffe, wie Glaskugeln, Mineralfasern, Whisker, Aluminiumoxidfasern, Glimmer, Quarzmehl und Wollastonit zugesetzt werden.

Neben den Komponenten A, B, C, D, E können die erfindungsgemäßen Formmassen im Prinzip auch weitere Polymere enthalten.

Die Herstellung der erfindungsgemäßen Formmassen aus den Komponenten kann nach jeder beliebigen Weise nach allen bekannten Methoden erfolgen. Vorzugsweise erfolgt jedoch das Abmischen der Komponenten durch Schmelze-Vermischung, beispielsweise gemeinsames Extrudieren, Kneten oder Verwalzen der Komponenten, z. B. bei Temperaturen im Bereich von 160 bis 400°C, bevorzugt von 180 bis 280°C.

Die Komponenten können in einer bevorzugten Ausführungsform zuvor aus den bei den jeweiligen Herstellschritten erhaltenen Reaktionsmischungen teilweise oder vollständig isoliert worden sind. Beispielsweise können die Pfropfcopolymere C als feuchte Krümel mit einem Granulat des vinylaromatischen Copolymers B vermischt werden, wobei dann während des Vermischens die vollständige Trocknung zu den beschriebenen Pfropfcopolymeren erfolgt.

Die Komponenten können in jeweils reiner Form geeigneten Mischvorrichtungen, insbesondere Extrudern, bevorzugt Doppelschneckenextrudern, zugeführt werden. Es können aber auch einzelne Komponenten, beispielsweise A und B, zuerst vorgemischt und anschließend mit weiteren Komponenten B oder C oder anderen Komponenten, beispielsweise D und E, vermischt werden. Die Komponente B kann dabei als vorab separat hergestellte Komponente eingesetzt werden. Es ist auch möglich, den Kautschuk und das vinylaromatische Copolymer unabhängig voneinander zu dosieren.
In einer Ausführungsform wird zuerst ein Konzentrat, beispielsweise der Komponenten D und E in der Komponente C hergestellt (sogenannte Additiv-Batches oder Masterbatches) und anschließend mit den gewünschten Mengen der restlichen Komponenten vermischt. Die Formmassen können nach dem Fachmann bekannten Verfahren beispielsweise zu Granulaten, oder aber auch direkt zu beispielsweise Formkörpern verarbeitet werden.

Die erfindungsgemäßen Formmassen können zu Folien, Formkörpern oder Fasern verarbeitet werden.
Diese Folien, Formkörpern oder Fasern sind insbesondere für den Einsatz im Außenbereich, d.h. unter Witterungseinfluss, geeignet. Diese Folien, Formkörpern oder Fasern können nach den bekannten Verfahren der Thermoplast-Verarbeitung aus den erfindungsgemäßen Formmassen hergestellt werden.

Insbesondere kann die Herstellung durch Thermoformen, Extrudieren, Spritzgießen, Kalandrieren, Hohlkörperblasen, Pressen, Presssintern, Tiefziehen oder Sintern, vorzugsweise durch Spritzgießen, erfolgen.

Die erfindungsgemäßen Formmassen weisen gegenüber den bekannten stabilisierten Formmassen eine nochmals verbesserte Witterungsbeständigkeit, d.h. eine nochmals verbesserte Wärme-, Licht- und/oder Sauerstoffbeständigkeit, auf.

Die Erfindung wird anhand der nachfolgenden Beispiele und Ansprüche näher erläutert.

### Zu den Messmethoden:

Die Bestimmung des Gelbwert (Yellowness Index YI) erfolgte durch Bestimmung der Farbkoordinaten X,Y,Z nach DIN 6167 bei Normlicht D 65 und 10°-Normalbeobachter.

Die Messung des Oberflächenglanzes aller Proben erfolgte nach DIN 67530 bei 60° Betrachtungswinkel.

Die Kerbschlagzähigkeit der Produkte wurde bei Raumtemperatur an ISO-Stäben nach ISO 179 1 eA bestimmt.

Der E-Modul, die Streckspannung und die Reißdehnung wurden nach ISO 527 bei 25°C bestimmt.

Die Wärmeformbeständigkeit der Proben wurde mittels der Vicat-Erweichungstemperatur ermittelt. Die Vicat-Erweichungstemperatur wurde nach der Norm DIN ISO 306, mit einer Kraft von 50 N und einer Temperatursteigerung von 50 K je Stunde, an Normkleinstäben ermittelt.

Die Zusammensetzung der verwendeten Styrolcopolymere wurde durch quantitative IR-Spektroskopie ermittelt.

### Zu den Einsatzstoffen

Komponenten oder Produkte mit vorangestelltem "V-" sind nicht erfindungsgemäß und dienen zum Vergleich.

Als Komponente A (bzw. V-A zum Vergleich) wurden eingesetzt:
- A-i:: Ein α-Methylstyrol, Styrol, Acrylnitril Terpolymer mit 60 Gew.-% α-Methylstyrol, 14,7 Gew.-% Styrol und 25,4 Gew.-% Acrylnitril und einer Viskositätszahl von 49,1 (gemessen in 0,5 Gew.-% DMF Lösung bei 25°C), einem Gelbwert von 18 und einer Vicat B-Erweichungstemperatur von 120,1. Es ergeben sich 2,8% α-Methylstyrol/Styrol Triaden (S-S-S) und 42,5% α-Methylstyrol/Styrol Diaden (S-S) aus der ¹³C-NMR Analyse.
- A-ii:: Ein α-Methylstyrol, Styrol, Acrylnitril Terpolymer mit 58,3 Gew.% α-Methylstyrol, 18,2 Gew.-% Styrol und 23,7 Gew.-% Acrylnitril und einer Viskositätszahl von 52,6 (gemessen in 0,5 Gew.-% DMF Lösung bei 25°C), einem Gelbwert von 18 und einer Vicat B-Erweichungstemperatur von 121,5°C. Es ergeben sich 4,3% α-Methylstyrol/Styrol Triaden (S-S-S) und 51% α-Methylstyrol/Styrol Diaden (S-S) aus der ¹³C-NMR Analyse.
- V-A-iii:: Ein α-Methylstyrol, Styrol, Acrylnitril Terpolymer mit 63,0 Gew.% α-Methylstyrol, 8,9 Gew.-% Styrol und 27,3 Gew.-% Acrylnitril und einer Viskositätszahl von 53,3 (gemessen in 0,5 Gew.-% DMF Lösung bei 25°C), einem Gelbwert von 47 und einer Vicat B-Erweichungstemperatur von 118°C. Dieses Terpolymer ist kommerziell von der LG Chemical Co. Ltd® unter der Bezeichung 98 UHMBK erhältlich. Es ergeben sich 2,1% α-Methyl-styrol/Styrol Triaden (S-S-S) und 29,2% α-Methylstyrol/Styrol Diaden (S-S) aus der ¹³C-NMR Analyse.
- V-A-iv:: Ein α-Methylstyrol, Styrol, Acrylnitril Terpolymer mit mit 67 Gew.-% α-Methylstyrol, 5 Gew.% Styrol und 28 Gew.-% Acrylnitril und einer Viskositätszahl von 58 (gemessen in 0,5 Gew.% DMF Lösung bei 25°C), einem Gelbwert von 28 und einer Vicat B-Erweichungstemperatur von 112,5°C, wie in der WO 2006/019214 beschrieben.
- V-A-v:: Ein Ein α-Methylstyrol, Styrol, Acrylnitril Terpolymer wurde analog EP 419 in wässriger Dispersion synthetisiert. 780g Acrylnitril, 300g Styrol, 1470g alpha-Methylstyrol wurden unter Ausschluss von Luft zu 6300g von deionisiertem Wasser gegeben in denen 4.2g KOH und 60g von Kaliumstearat bei 75°C gelöst waren. Nachdem die Reaktionsmischung auf 50°C mit Hilfe eines Ölbades gekühlt wurde, wurde ein Redox-Initiatorsystem bestehend aus 12,6g Cumol Hydroperoxide, 0,3g Eisensulphat gelöst in 150g Wasser, 15g Natrium pyrophosphate in 18g Dextrose gelöst in 450g Wasser. Die Dispersion wurde mit 130g Magnesiumsulfat gefällt, das Wasser abzentrifugiert und anschließend mit 80°C für 15 Stunden getrocknet. Es ergab sich ein α-Methylstyrol, Styrol, Acrylnitril Terpolymer mit einem Gelbwert von 21 und einer Vicat B-Erweichungstemperatur von 106°C.

Als Komponente B (bzw. V-B zum Vergleich) wurden eingesetzt:
- B-i:: ein Butadien-Propfkautschuk, dessen Synthese in der DE 197 28 629 A1 als Beispiel A6 beschrieben wird.
B-i₁ 41826,4g Butadien und 1293,6g Styrol werden in Gegenwart von 432g Tert.-Dodecylmercaptan (TDM), 311 g Kaliumsalz von C₁₂-C₂₀ Fettsäuren, 82g Kaliumpersulfat, 147g Natriumhydrogencarbonat und 58400g Wasser bei 65°C zu einem Polybutadienlatex polymerisiert. Im einzelnen wurde verfahren wie in der EP-A 62901, Bsp. 1, S. 9, Z. 20 bis S. 10 Z. 6 beschrieben wobei das TDM in Abweichung davon in einer Portion zu Beginn der Reaktion zugegeben wurde. Der Umsatz betrug 98%. Die mittlere Teilchengröße d₅₀ des Latex betrug 134nm, der Quellungsindex betrug 20,3. Die mittles NMR bestimmte T₂-Zeit betrug von 3,8 bis 2,9 ms. Zur Agglomeration des Latex wurden 35000g des erhaltenen Latex bei 65°C durch Zugabe von 2700g einer Dispersion (Feststoffgehalt 10 Gew.-%) aus 96 Gew.-% Ethylacrylat und 4 Gew.-% Methacrylsäureamid agglomeriert.
B-i₂ Dem agglomerierten Latex wurden 9000g Wasser, 130g Kaliumsalz von C₁₂-C₂₀-Fettsäuren und 17g Kaliumperoxodisulfat zugefügt. Anschließend wurden 18667g Styrol und 4666g Acrylnitril bei 75°C innerhalb von 4 Stunden unter Rühren hinzugefügt. Der Umsatz, bezogen auf die Pfropfmonomeren, was nahezu quantitativ. Die erhaltene Pfropfpolymerisat-Dispersion wies eine bimodale Teilchengrößenverteilung auf. Ein erstes Maximum der Teilchengrößenverteilung lag bei 166nm, ein zweites Maximum im Bereich 442nm.
Die erhaltene Dispersion wurde mit einer wässrigen Dispersion eines Antioxidans versetzt und anschließend durch Zugabe einer Magnesiumsulfatlösung koaguliert. Der koagulierte Kautschuk wurde vom Dispersionswasser abzentrifugiert und mit Wasser gewaschen. Man erhielt einen Kautschuk mit ca. 30 Gew.-% anhaftendem bzw. eingeschlossenem Restwasser. Es ergab sich ein Quellungsindex von 8,8 für C-i in Toluol.
- V-B-ii:: Die Herstellung erfolgte gemäß Komponente C-i, jedoch mit 44g Tert.-Dodecylmercaptan (TDM) anstelle von 432g Tert.-Dodecylmercaptan (TDM). Die mittles NMR bestimmte T₂-Zeit betrug von 3,5 bis 2,5 ms. Nach der in C-i₂ geschilderten Pfropfung ergab sich ein Quellungsindex von 6,3 in Toluol. Die mittlere Teilchengröße wurde mit 316nm bestimmt

Als Komponente C (bzw. V-C zum Vergleich) wurden eingesetzt:
- C-i:: Ein Styrol-Acrylnitril Copolymer mit 75 Gew.-% Styrol und 25 Gew.-% Acrylnitril und einer Viskositätszahl von 98 (gemessen in 0,5 Gew.-% DMF Lösung bei 25°C), einem Gelbwert von 2 und einer Vicat B-Erweichungstemperatur von 103°C.

Als Komponente D wurde eingesetzt:
- D-i:: Ein handelsüblicher Weichmacher, Hexamoll Dinch® (BASF SE, Deutschland).

Als Komponente E wurde eingesetzt:
- E-i:: Eine handelsübliche Glasfaser von Typ 183F-11C (Firma Cratec)

### Herstellung der Formmassen und Formkörper:

Die Komponenten A, B, C, D (jeweilige Gewichtsteile siehe Tabelle 1) wurden in einem Zweischneckenextruder (ZSK30 von Fa. Werner & Pfleiderer) bei 250°C homogenisiert und in ein Wasserbad extrudiert. Die Extrudate wurden granuliert und getrocknet. Aus den Granulaten stellte man auf einer Spritzgussmaschine bei 250°C SchmelzeTemperatur und 60°C Werkzeug-Oberflächentemperatur Prüfkörper her und bestimmte die in Tabelle 1 genannten Eigenschaften.

**Tabelle 1:**

| Zusammensetzung und Eigenschaften der Formmassen (Mengen in Gewichtsteilen; vorangestelltes V bedeutet zum Vergleich) | | | | | | | | | | |
|---|---|---|---|---|---|---|---|---|---|---|
| Beispiel | 1 | 2 | 3 | 4 | 5 | 6 | V-7 | V-8 | V-9 | V-10 |
| Zusammensetzung | | | | | | | | | | |
| | | | | | | | | | | |
| A-i | 80 | | 60 | 70 | 70 | 75 | | 60 | | |
| A-ii | | 80 | | | | | | | | |
| V-A-iii | | | | | | | *80* | | | |
| V-A-iv | | | | | | | | | | 80 |
| V-A-v | | | | | | | | | 80 | |
| B-i | 20 | 20 | 20 | 20 | 20 | 20 | *20* | 20 | 20 | 20 |
| V-B-ii | | | | | | | | | | |
| C-i | | | 20 | | 10 | 5 | | 20 | | |
| E-i | | | | 10 | | 1 | | | | |
| | | | | | | | | | | |
| Geibwert | 15 | 13 | 14 | 17 | 15 | 14 | *31* | 33 | 37 | 29 |
| Vicat B [°C] | 117 | 117 | 112 | 115 | 112 | 111 | *109* | 109 | 104 | 108 |
| Glanz | 96 | 98 | 98 | 81 | 98 | 98 | 88 | 78 | 76 | 82 |
| Notched Charpy [kJ/m²] | 11 | 10 | 13 | 8 | 10 | 12 | 9 | 5 | 5 | 7 |
| E-Modul [MPa] | 2799 | 2738 | 2527 | 4354 | 2627 | 2519 | 2672 | 2558 | 2487 | 2653 |
| Streckspannung [Mpa] | 58,8 | 58,2 | 57,3 | 79,3 | 56,2 | 59,3 | 53,2 | 56,9 | 48,7 | 53,8 |
| Reißdehnung [%] | 8,5 | 7,4 | 8,6 | 3,3 | 8,2 | 8,9 | 7,4 | 8,3 | 5,8 | 7,2 |

Zusätzlich zu den in Tabelle 1 genannten Versuchen wurde eine Formmasse (7) hergestellt aus:
79 Gewichtsteilen A-i,
20 Gewichtsteilen B-i, und
1 Gewichtsteil D-i.

Diese Formmasse (7) hat folgende Eigenschaften:
einen Gelbwert von 16,
eine Vicat-B von 115°C,
einen Glanz von 97,
ein Notched Charpy von 12 [kJ/m²],
ein E-Modul von 2712,
eine Streckspannung von 56,6 [Mpa] und
einen Reißdehnung von 8,0 [%].

Die Beispiele belegen, dass die erfindungsgemäßen Formmassen 1 bis 7 enthaltend mindestens die Komponenten A und B (und in mehreren Fällen auch Komponente C) in mehrfach durchgeführten Experimenten gegenüber den bekannten stabilisierten Formmassen eine verringerte Gelbfärbung (Gelbwert, YI) und erhöhte Wärmeformbeständigkeit aufweisen.

Die Zusammensetzungen sind jeweils in Gewichtsanteilen angegeben.

## Patentansprüche

1. Thermoplastische Formmasse, enthaltend:
a) 50 bis 85 Teile eines Terpolymeres auf Basis von Acrylnitril, alpha-Methylstyrol und Styrol (als Komponente A), bestehend aus:
12 bis 20 Gew.-% Styrol
22 bis 27 Gew.-% Acrylnitril,
57 bis 62 Gew.-% alpha-Methylstyrol,
0 bis 3 Gew.-% weitere copolymerisierbare Monomere,
b) 15 bis 50 Teile eines oder mehrerer schlagzäh-modifizierender Propfkautschuke mit olefinischer Doppelbindung in der Kautschukphase, als Komponente B,
c) 0 bis 30 Teile eines oder mehrerer Copolymere auf Basis von Styrol und Acrylnitril als Komponente C, bestehend aus
71 bis 81 Gew.-% Styrol,
29 bis 19 Gew.-% Acrylnitril,
0 bis 5 Gew.-% weitere copolymerisierbare Monomere,
d) 0 bis 30 Teile eines oder mehrerer Zusatzstoffe, die von den Komponenten A, B, C verschieden sind, als Komponente D, und
e) 0 bis 100 Teile faser- oder teilchenfömiger Füllstoffe als Komponente E.

2. Thermoplastische Formmasse nach Anspruch 1, enthaltend:
a) 50 bis 85 Teile eines Terpolymeres auf Basis von Acrylnitril, alpha-Methylstyrol und Styrol (als Komponente A), bestehend aus:
12 bis 20 Gew.-% Styrol
22 bis 27 Gew.-% Acrylnitril,
57 bis 62 Gew.-% alpha-Methylstyrol,
b) 15 bis 50 Teile eines oder mehrerer schlagzäh-modifizierender Propfkautschuke mit olefinischer Doppelbindung in der Kautschukphase, als Komponente B,
c) 0 bis 30 Teile eines Copolymers auf Basis von Styrol und Acrylnitril als Komponente C, bestehend aus
71 bis 81 Gew.-% Styrol,
29 bis 19 Gew.-% Acrylnitril,
d) 0 bis 10 Teile eines oder mehrerer Zusatzstoffe, die von den Komponenten A, B, C verschieden sind, als Komponente D, und
e) 0 bis 40 Teile faser- oder teilchenförmiger Füllstoffe als Komponente E.

3. Thermoplastische Formmasse nach einem der Ansprüche 1 oder 2, enthaltend 50 bis 85 Teile eines Terpolymers auf Basis von Acrylnitril, alpha-Methylstyrol und Styrol (als Komponente A), wobei das Terpolymer einen Restgehalte an Monomeren von insgesamt weniger als 3000 ppm aufweist.

4. Thermoplastische Formmasse nach einem der Ansprüche 1 bis 3, enthaltend 50 bis 85 Teile eines Terpolymers auf Basis von Acrylnitril, alpha-Methylstyrol und Styrol (als Komponente A), wobei das Terpolymer Restgehalte an Monomeren von weniger als 200 ppm Styrol, weniger als 200 ppm Ethylbenzol, weniger als 200 ppm Acrylnitril und weniger als 2000 ppm alpha-Methylstyrol aufweist.

5. Thermoplastische Formmasse nach einem der Ansprüche 1 bis 4, enthaltend 50 bis 85 Teile eines Terpolymers auf Basis von Acrylnitril, alpha-Methylstyrol und Styrol (als Komponente A), welches folgende Eigenschaften hat:
- eine Vicat B-Erweichungstemperatur über 120°C (nach DIN ISO 306),
- einen Gelbwert unter 20 (Bestimmung der Farbkoordinaten X, Y, Z nach DIN 6167 bei Normlicht D65 unter 10°-Normafbetrachter) und
- eine Viskositätszahl von 40 bis 60 (gemessen nach DIN ISO 1628-2 bei 25°C als 0,5-prozentige Lösung in Dimethylformamid).

6. Thermoplastische Formmassen nach einem der Ansprüche 1 bis 5, **dadurch gekennzeichnet, dass** die Komponente B ein schlagzäh-modifizierender Propfkautschuk ist, der aus einer Propfauflage B1 aus 50 bis 80 Gew.-% (bezogen auf B) eines Elastomer-vernetzten Butadien-Polymers B1 besteht, sowie einer Propfauflage B2 bestehend aus:
- 25 bis 15 Gew.-%, vorzugsweise 24 bis 16 Gew.-%, besonders bevorzugt aus 23 bis 17 Gew.-% Acrylnitril und
- 75 bis 85 Gew.-%, vorzugsweise 76 bis 84 Gew.-%, besonders bevorzugt aus 77 bis 83 Gew.-% Styrol und/oder alpha-Methylstyrol.

7. Thermoplastische Formmasse nach einem der Ansprüche 1 bis 6, **dadurch gekennzeichnet, dass** der mittlere Teilchendurchmesser von Komponente B zwischen 50 bis 800 nm liegt.

8. Thermoplastische Formmasse nach einem der Ansprüche 1 bis 7, **dadurch gekennzeichnet, dass** eine Komponente B mit einer bimodalen Teilchengrößenverteilung einsetzt wird.

9. Thermoplastische Formmasse nach einem der Ansprüche 1 bis 8, **dadurch gekennzeichnet, dass** als Komponente C 1 bis 30 Teile eines Copolymers auf Basis von Styrol und Acrylnitril eingesetzt werden, bestehend aus 75 bis 77 Gew.-% Styrol und 25 bis 23 Gew.-% Acrylnitril.

10. Verfahren zur Herstellung einer thermoplastischen Formmasse nach einem der Ansprüche 1 bis 9, **dadurch gekennzeichnet, dass** man die Komponenten A und B sowie ggf. C bis E bei Temperaturen von 100 bis 300°C und einem Druck von 1 bis 50 bar in beliebiger Reihenfolge miteinander vermischt, anschließend knetet und extrudiert.

11. Verfahren zur Herstellung eines Terpolymers auf Basis von Acrylnitril, alpha-Methylstyrol und Styrol (Komponente A), bestehend aus 12 bis 20 Gew.-% Styrol, 22 bis 27 Gew.-% Acrylnitril, 57 bis 62 Gew.-% alpha-Methylstyrol, sowie 0 bis 3 Gew.-% weiterer copolymerisierbarer Monomere, **dadurch gekennzeichnet, dass** man die Monomere in einer radikalischen Lösungsmittel-Polymerisation bei Temperaturen von 100 bis 140°C umsetzt und anschließend in einem Rohrbündel-reaktor bei einem Druck von kleiner als 50 mbar den Restmonomer-Gehalt auf weniger als 3000 ppm reduziert.

12. Verwendung von thermoplastischen Formmassen nach einem der Ansprüche 1 bis 9 zur Herstellung von Formkörpern, Folien oder Fasern.

13. Verwendung der thermoplastischen Formmassen nach Anspruch 12 zur Herstellung von Formkörpern für KFZ-Bauteile oder Teile von Elektronikgeräten.

14. Formkörper, Fasern oder Folien aus einer thermoplastischen Formmasse nach einem der Ansprüche 1 bis 9.

## Claims

1. Thermoplastic molding composition comprising:
a) from 50 to 85 parts of a terpolymer based on acrylonitrile,
alpha-methylstyrene, and styrene (as component A) consisting of:
from 12 to 20% by weight of styrene,
from 22 to 27% by weight of acrylonitrile,
from 57 to 62% by weight of alpha-methylstyrene,
from 0 to 3% by weight of other copolymerizable monomers,
b) from 15 to 50 parts of one or more impact-modifying graft rubbers having an olefinic double bond in the rubber phase, as component B,
c) from 0 to 30 parts of one or more copolymers based on styrene and acrylonitrile, as component C, consisting of
from 71 to 81% by weight of styrene,
from 29 to 19% by weight of acrylonitrile,
from 0 to 5% by weight of other copolymerizable monomers,
d) from 0 to 30 parts of one or more additional substances differing from components A, B, C, as component D, and
e) from 0 to 100 parts of fibrous or particulate fillers as component E.

2. Thermoplastic molding composition according to Claim 1, comprising:
a) from 50 to 85 parts of a terpolymer based on acrylonitrile,
alpha-methylstyrene and styrene (as component A) consisting of:
from 12 to 20% by weight of styrene,
from 22 to 27% by weight of acrylonitrile,
from 57 to 62% by weight of alpha-methylstyrene,
b) from 15 to 50 parts of one or more impact-modifying graft rubbers having an olefinic double bond in the rubber phase, as component B
c) from 0 to 30 parts of a copolymer based on styrene and acrylonitrile, as component C, consisting of
from 71 to 81% by weight of styrene,
from 29 to 19% by weight of acrylonitrile,
d) from 0 to 10 parts of one or more additional substances differing from components A, B, C, as component D, and
e) from 0 to 40 parts of fibrous or particulate fillers as component E.

3. Thermoplastic molding composition according to Claim 1 or 2, comprising from 50 to 85 parts of a terpolymer based on acrylonitrile, alpha-methylstyrene, and styrene (as component A), where the total residual contents of monomers in the terpolymer are less than 3000 ppm.

4. Thermoplastic molding composition according to any of Claims 1 to 3, comprising from 50 to 85 parts of a terpolymer based on acrylonitrile, alpha-methylstyrene, and styrene (as component A), where the residual contents of monomers in the terpolymer are less than 200 ppm of styrene, less than 200 ppm of ethylbenzene, less than 200 ppm of acrylonitrile, and less than 2000 ppm of alpha-methylstyrene.

5. Thermoplastic molding composition according to any of Claims 1 to 4, comprising from 50 to 85 parts of a terpolymer based on acrylonitrile, alpha-methylstyrene, and styrene (as component A), which has the following properties:
- Vicat B softening point above 120°C, (in accordance with DIN ISO 306)
- Yellowness Index below 20 (determination of color coordinates X, Y, Z in accordance with DIN 6167 using D65 standard light with 10° standard observer), and
- viscosity number from 40 to 60 (measured in accordance with DIN ISO 1628-2 at 25° on a 0.5 percent solution in dimethylformamide).

6. Thermoplastic molding composition according to any of Claims 1 to 5, **characterized in that** component B is an impact-modifying graft rubber which consists of a graft B1 made of from 50 to 80% by weight (based on B) of an elastomer-crosslinked butadiene polymer B1, and also of a graft B2 consisting of:
- from 25 to 15% by weight, preferably from 24 to 16% by weight, with particular preference of from 23 to 17% by weight, of acrylonitrile and
- from 75 to 85% by weight, preferably from 76 to 84% by weight, with particular preference of from 77 to 83% by weight, of styrene and/or alpha-methylstyrene.

7. Thermoplastic molding composition according to any of Claims 1 to 6, **characterized in that** the average particle diameter of component B is from 50 to 800 nm.

8. Thermoplastic molding composition according to any of Claims 1 to 7, **characterized in that** a component B with a bimodal particle size distribution is used.

9. Thermoplastic molding composition according to any of Claims 1 to 8, **characterized in that** component C used comprises from 1 to 30 parts of a copolymer based on styrene and acrylonitrile, consisting of from 75 to 77% by weight of styrene and from 25 to 23% by weight of acrylonitrile.

10. Process for the production of a thermoplastic molding composition according to any of Claims 1 to 9, **characterized in that** components A and B, and also optionally C to E, are mixed with one another in any desired sequence at temperatures of from 100 to 300°C and at a pressure of from 1 to 50 bar, and then are kneaded and extruded.

11. Process for the production of a terpolymer based on acrylonitrile, alpha-methylstyrene, and styrene (component A) consisting of from 12 to 20% by weight of styrene, from 22 to 27% by weight of acrylonitrile, from 57 to 62% by weight of alpha-methylstyrene, and also from 0 to 3% by weight of other copolymerizable monomers, **characterized in that** the monomers are reacted in a free-radical solution polymerization reaction at temperatures of from 100 to 140°C and then the residual monomer content is reduced to less than 3000 ppm in a tube-bundle reactor at a pressure of less than 50 mbar.

12. Use of thermoplastic molding compositions according to any of Claims 1 to 9 for the production of moldings, foils, or fibers.

13. Use of the thermoplastic molding compositions according to Claim 12 for the production of moldings for motor-vehicle components or parts of electronic equipment.

14. Moldings, fibers, or foils made of a thermoplastic molding composition according to any of Claims 1 to 9.

## Revendications

1. Matériau de moulage thermoplastique, contenant :
a) 50 à 85 parties d'un terpolymère à base d'acrylonitrile, d'alpha-méthylstyrène et de styrène (en tant que composant A), constitué par :
12 à 20 % en poids de styrène,
22 à 27 % en poids d'acrylonitrile,
57 à 62 % en poids d'alpha-méthylstyrène,
0 à 3 % en poids d'autres monomères copolymérisables,
b) 15 à 50 parties d'un ou de plusieurs caoutchoucs greffés à résistance aux impacts modifiée contenant une double liaison oléfinique dans la phase caoutchouc, en tant que composant B,
c) 0 à 30 parties d'un où de plusieurs copolymères à base de styrène et d'acrylonitrile en tant que composant C, constitués par
71 à 81 % en poids de styrène,
29 à 19 % en poids d'acrylonitrile,
0 à 5 % en poids d'autres monomères copolymérisables,
d) 0 à 30 parties d'un ou de plusieurs additifs, qui sont différents des composants A, B, C, en tant que composant D, et
e) 0 à 100 parties de charges fibreuses ou particulaires, en tant que composant E.

2. Matériau de moulage thermoplastique selon la revendication 1, contenant :
a) 50 à 85 parties d'un terpolymère à base d'acrylonitrile, d'alpha-méthylstyrène et de styrène (en tant que composant A), constitué par :
12 à 20 % en poids de styrène,
22 à 27 % en poids d'acrylonitrile,
57 à 62 % en poids d'alpha-méthylstyrene,
b) 15 à 50 parties d'un ou de plusieurs caoutchoucs greffés à résistance aux impacts modifiée contenant une double liaison oléfinique dans la phase caoutchouc, en tant que composant B,
c) 0 à 30 parties d'un ou de plusieurs copolymères à base de styrène et d'acrylonitrile en tant que composant C, constitués par
71 à 81 % en poids de styrène,
29 à 19 % en poids d'acrylonitrile,
d) 0 à 10 parties d'un ou de plusieurs additifs, qui sont différents des composants A, B, C, en tant que composant D, et
e) 0 à 40 parties de charges fibreuses ou particulaires, en tant que composant E.

3. Matériau de moulage thermoplastique selon l'une quelconque des revendications 1 ou 2, contenant 50 à 85 parties d'un terpolymère à base d'acrylonitrile, d'alpha-méthylstyrène et de styrène (en tant que composant A), le terpolymère présentant une teneur résiduelle en monomères au total inférieure à 3 000 ppm.

4. Matériau de moulage thermoplastique selon l'une quelconque des revendications 1 à 3, contenant 50 à 85 parties d'un terpolymère à base d'acrylonitrile, d'alpha-méthylstyrène et de styrène (en tant que composant A), le terpolymère présentant des teneurs résiduelles en monomères de moins de 200 ppm de styrène, de moins de 200 ppm d'éthylbenzène, de moins de 200 ppm d'acrylonitrile et de moins de 2 000 ppm d'alpha-méthylstyrène.

5. Matériau de moulage thermoplastique selon l'une quelconque des revendications 1 à 4, contenant 50 à 85 parties d'un terpolymère à base d'acrylonitrile, d'alpha-méthylstyrène et de styrène (en tant que composant A), qui présente les propriétés suivantes :
- une température de ramollissement de Vicat B supérieure à 120 °C (selon DIN ISO 306),
- une valeur de jaunissement inférieure à 20 (détermination des coordonnées de couleur X, Y et Z selon DIN 6167 en lumière normée D65 à un angle d'observation normal de 10°) et
- un indice de viscosité de 40 à 60 (mesuré selon DIN ISO 1628-2 à 25 °C, sous la forme d'une solution à 0,5 pour cent dans du diméthylformamide).

6. Matériaux de moulage thermoplastiques selon l'une quelconque des revendications 1 à 5, **caractérisés en ce que** le composant B est un caoutchouc greffé à résistance aux impacts modifiée, qui est constitué par une base de greffage B1 constituée par 50 à 80 % en poids (par rapport à B) d'un polymère de butadiène réticulé par un élastomère B1, ainsi que d'une base de greffage B2 constituée par :
- 25 à 15 % en poids, de préférence 24 à 16 % en poids, de manière particulièrement préférée 23 à 17 % en poids, d'acrylonitrile, et
- 75 à 85% en poids, de préférence 76 à 84 % en poids, dé marnière particulièrement préférée 77 à 83 % en poids, de styrène et/ou d'alpha-méthylstyrène.

7. Matériau de moulage thermoplastique selon l'une quelconque des revendications 1 à 6, **caractérisé en ce que** le diamètre de particule moyen du composant B est compris entre 50 et 800 nm.

8. Matériau de moulage thermoplastique selon l'une quelconque des revendications 1 à 7, **caractérisé en ce qu'**un composant B ayant une distribution bimodale des tailles de particules est utilisé.

9. Matériau de moulage thermoplastique selon l'une quelconque des revendications 1 à 8, **caractérisé en ce que** 1 à 30 parties d'un copolymère à base de styrène et d'acrylonitrile sont utilisées en tant que composant C, constitué par 75 à 77 % en poids de styrène et 25 à 23 % en poids d'acrylonitrile.

10. Procédé de fabrication d'un matériau de moulage thermoplastique selon l'une quelconque des revendications 1 à 9, **caractérisé en ce que** les composants A et B, ainsi qu'éventuellement C à E, sont mélangés les uns avec les autres à des températures de 100 à 300 °C et à une pression de 1 à 50 bar dans un ordre quelconque, puis malaxés et extrudés.

11. Procédé de fabrication d'un terpolymère à base d'acrylonitrile, d'alpha-méthylstyrène et de styrène (composant A), constitué par 12 à 20 % en poids de styrène, 22 à 27 % en poids d'acrylonitrile, 57 à 62 % en poids d'alpha-méthylstyrène, ainsi que 0 à 3 % en poids d'autres monomères copolymérisables, **caractérisé en ce que** les monomères sont mis en réaction par polymérisation radicalaire en solvant à des températures de 100 à 140 °C, puis la teneur en monomères résiduelle est réduite à moins de 3 000 ppm dans un réacteur a faisceau de tubes à une pression inférieure à 50 mbar.

12. Utilisation de matériau de moulage thermoplastiques selon l'une quelconque des revendications 1 à 9 pour la fabrication de corps moulés, de films ou de fibres.

13. Utilisation des matériaux de moulage thermoplastiques selon la revendication 12 pour la fabrication de corps moulés pour composants automobiles ou parties d'appareils électroniques.

14. Corps moulés, fibres ou films en un matériau de moulage thermoplastique selon l'une quelconque des revendications 1 à 9.
